(19) Europäisches Patentamt
European Patent Office
Office européen des brevets

(11) **EP 1 707 581 B1**

(12) **EUROPEAN PATENT SPECIFICATION**


(45) Date of publication and mention of the grant of the patent:
**13.10.2010 Bulletin 2010/41**

(21) Application number: **06006576.0**

(22) Date of filing: **29.03.2006**

(51) Int Cl.:
***C08F 220/04*** *(2006.01)* ***C08F 220/28*** *(2006.01)*
***C08F 2/38*** *(2006.01)* ***C04B 24/26*** *(2006.01)*
***C04B 24/28*** *(2006.01)*


(54) **Polycarboxylic acid polymer for blending in cement**

Polycarbonsäurepolymer zur Vermischung mit Zement

Polymère d'acides carboxyliques pour mélangeage avec du ciment


(84) Designated Contracting States:
**DE ES FR IT**

(30) Priority: **31.03.2005 JP 2005104912**

(43) Date of publication of application:
**04.10.2006 Bulletin 2006/40**



(73) Proprietor: **NIPPON SHOKUBAI CO., LTD.**
**Osaka-shi, Osaka-fu 541 (JP)**

(72) Inventors:
- **Yuasa, Tsutomu**
**Osaka-shi**
**Osaka (JP)**
- **Sakamoto, Noboru**
**Takatsuki-shi**
**Osaka (JP)**
- **Otani, Mari**
**Nara-shi**
**Nara (JP)**

(74) Representative: **Müller-Boré & Partner**
**Patentanwälte**
**Grafinger Straße 2**
**81671 München (DE)**



(56) References cited:
**EP-A- 1 110 981** **EP-A- 1 300 426**
**WO-A-02/090409**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 1 707 581 B1

## Description

The present invention relates to a polycarboxylic acid polymer to be added to a cement admixture, a method of producing the same, and a cement admixture and a cement composition containing the same. In particular, the present invention relates to a cement admixture for preparation of cement compositions (cement paste, mortar, concrete, and the like) excellent in fluidity and fluidity-retention, a polycarboxylic acid polymer preferably added thereto, and a method of producing the same.

Conventionally, for a material for outside walls and structural units of buildings, a cement admixture is added to cement paste (mixture of cement and water), mortar (mixture of cement paste and fine aggregate sand) or concrete (mixture of mortar and coarse aggregate small stone), for improvement in the strength and durability of hardened cement products. There is a need for the cement admixture to retain the sufficient dispersibility, fluidity and processability even when the water content of the cement composition is lowered (water reduction) and yet to have improved durability and strength by the water reduction. In addition, the cement admixture is required to prevent the cement composition from being lowered in its dispersibility (or to show excellent retention), because the workability is lowered as the dispersibility of the cement composition is getting lowered with time.

Among cement admixtures above, polycarboxylic acid-based cement admixtures are preferably used than other cement admixtures such as naphthalene-based products, because polycarboxylic acid-based cement admixtures provide the cement composition with higher dispersibility. For example, Japanese Patent Publication No. H09-86990 A discloses a cement admixture containing a copolymer consisting of a particular unsaturated polyalkylene glycol monomer and a (meth)acrylic acid monomer.

However, the cement composition containing the polycarboxylic acid cement admixture was excellent in dispersibility, but slightly insufficient in the retention of the dispersibility, because the dispersibility thereof gradually decreased over time. The dispersibility-retention is an important factor in the high water-reduction-rate range necessary for high-strength concretes, and the bad retention causes the low processability. That is, the fluidity of the concrete is lowered in the high water-reduction-rate range. For example, since the viscosity of the concrete will be high at the higher shear rate, the pump has the big load when pressure-feeding the concrete, resulting in the troubles. Especially in winter when the air temperature becomes 15°C or lower, the temperature of the concrete decreases like the air temperature, resulting in the high viscosity of the concrete and the remarkably lowered processability. Further, since the dispersibility of the concrete is lowered than at normal temperature, it would be difficult to fill the concrete into a mold, and thus processability is remarkably lowered.

For the reason described above, JP No. H09-286645 A discloses a cement admixture containing a longer polyalkylene chain to improve the dispersibility-retention of the cement compositions. However, even the cement composition containing the cement admixture was slightly insufficient in terms of the dispersibility. Further, JP No. 2003-206169 A discloses a cement admixture excellent in the dispersibility retention that contains a polymer having its polymer main peak slightly shifted toward higher molecular weight determined by GPC measurement. However, the above cement admixture was still slightly insufficient in terms of the dispersibility.

In view of the problems above, an object of the present invention is to provide a polycarboxylic acid polymer for a cement admixture to provide a cement composition excellent in the dispersibility and the retention of the dispersibility.

The inventors have focused on the fact that polymers having a relatively high-molecular weight are superior in dispersibility but inferior in dispersibility-retention, while polymers having a relatively lower molecular weight are superior in dispersibility-retention but inferior in dispersibility. The inventors considered that it was difficult to prepare a cement composition superior in both properties using the polymers for the cement admixture having a relatively narrower molecular weight distribution, like the polymer described in the above publications, because either the properties of the high-molecular weight polymer or those of low-molecular weight polymer are provided more strongly.

Thus, the cement admixture has been prepared by using polymers having a broad molecular weight distribution wherein the ratio of the high-molecular weight polymer and the low-molecular weight polymer was properly adjusted. Further, the dispersibility-retention and the dispersibility of the cement compositions containing the cement admixture have been studied. As a result, it has been found that both dispersibility and dispersibility-retention are provided by the cement composition using the cement admixture containing the polymer that has a particular parameter within the specific range. The parameter of the polymer is defined by the results obtained by determining the molecular weight distribution of the polymers with gel permeation chromatography (GPC). Then the inventors have achieved the present invention, based on the findings that it is possible to facilitate the production of the polymer having the above properties by preparing the polymer in at least two steps, and changing the ratios of the chain-transfer agent to the monomer components by 5 times or more between the polymerization processes constituting at least the two steps.

The polycarboxylic acid polymer for the cement admixture according to the present invention is the polycarboxylic acid polymer characterized in that,

(1) a molecular weight distribution of the polycarboxylic acid polymer is determined by gel permeation chromatography to provide a molecular-weight distribution curve having an elution time on the horizontal axis,
(2) a base line is drawn on the molecular-weight distribution curve,
(3) an elution-starting time, an elution-ending time, and a peak-top time of a peak corresponding to the polymer component are determined respectively as Lh, Ln, and Mp,
(4) Lm is calculated according to the following Formula (1):

$$Lm = (Ln+Mp)/2 \qquad (1),$$

and
(5) $P_0$ and $Q_0$ satisfy the following Formula (2):

$$15 \leq (P_0 \times 100)/(P_0+Q_0) \leq 45 \qquad (2)$$

wherein $P_0$ is defined as a peak area between the elution times Lm and Ln and $Q_0$ is defined as the peak area between the elution times Lh and Mp,
wherein the polymer contains a constituent unit (I) in an amount of 2 wt% to 90 wt%, represented by the following Chemical Formula (3)

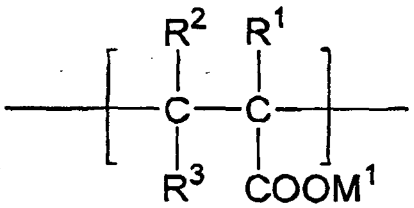

(3)

[wherein, $R^1$, $R^2$ and $R^3$ each independently represent a hydrogen atom, a methyl group, or $-(CH_2)_zCOOM^2$ [$-(CH_2)_zCOOM^2$ may form an anhydride with $-COOM^1$ or another $-(CH_2)_zCOOM^2$]; Z represents an integer of 0 to 2; and $M^1$ and $M^2$ each independently represent a hydrogen atom, an alkali metal atom, an alkali-earth metal atom, an ammonium group or an organic amine group], and
wherein the polymer contains a constituent unit (II) in an amount of 2 wt% to 98 wt%, represented by the following Chemical Formula (4):

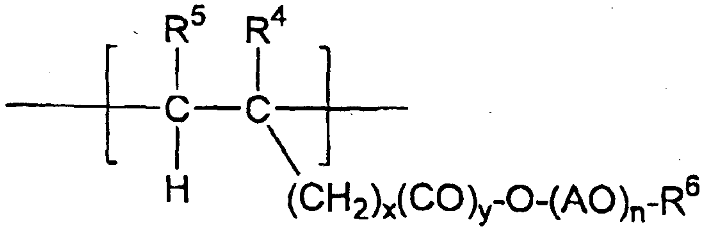

(4)

[wherein, $R^4$ and $R^5$ each independently represent a hydrogen atom or a methyl group; each AO independently represents an oxyalkylene group having 2 or more carbon atoms or a mixture of two or more thereof; x represents an integer of 0 to 2; y is 0 or 1; n represents an average oxyalkylene-group-addition mole number of 1 to 300; and $R^6$ represents a hydrogen atom or a hydrocarbon group having 1 to 20 carbon atoms].

In a preferred embodiment, the polycarboxylic acid polymer essentially comprises an oxyalkylene chain containing a constituent unit of an oxyalkylene group having 3 or more carbon atoms as an oxyalkylene chain in the constituent unit (II) for improvement in the state of the concrete. It is also preferable that oxyalkylene chains each containing a constituent unit of an oxyalkylene group having 2 carbon atoms are bound to both terminals of the oxyalkylene chain having a constituent unit of an oxyalkylene group having 3 or more carbon atoms.

The present invention provides the cement admixture comprising the polycarboxylic acid polymer for the cement admixture as described above. The cement admixture preferably contains a second polycarboxylic acid polymer that is different from the above polycarboxylic acid polymer for the cement admixture. The cement admixture may further contain an adduct of a polyalkyleneimine with an alkyleneoxide. At the time, the cement admixture preferably comprises the second polycarboxylic acid polymer that is different from the polycarboxylic acid polymer and the adduct of a polyalkyleneimine with the alkyleneoxide, in a ratio of the polycarboxylic acid polymer/the second polycarboxylic acid polymer/ the adduct of the polyalkyleneimine with the alkyleneoxide being 10 to 80/10 to 89/1 to 80 (by mass).

The present invention further provides a cement composition which preferably contains the cement admixture, a cement and at least water.

The above polycarboxylic acid polymer is preferably produced by a method comprising polymerizing a unsaturated monomer component containing a monomer represented by the following Chemical Formula (5):

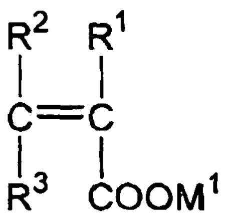

(5)

[wherein, $R^1$, $R^2$ and $R^3$ each independently represent a hydrogen atom, a methyl group, or $-(CH_2)_ZCOOM^2$ [$-(CH_2)_ZCOOM^2$ may form an anhydride with $-COOM^1$ or another $-(CH_2)_ZCOOM^2$]; Z represents an integer of 0 to 2; and $M^1$ and $M^2$ each independently represent a hydrogen atom, an alkali metal atom, an alkali-earth metal atom, an ammonium group or an organic amine group]

in at least two steps where the amounts of a chain-transfer agent with respect to the unsaturated monomer components are different from each other,

wherein the amounts of the chain-transfer agent used with respect to the unsaturated monomer components are different from each other by 5 times or more between polymerization steps constituting the two steps, and wherein the unsaturated monomer component contains a monomer represented by the following Chemical Formula (6):

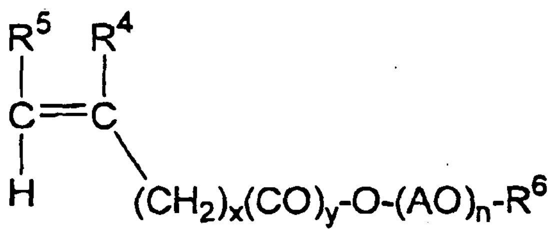

(6)

[wherein, $R^4$ and $R^5$ each independently represent a hydrogen atom or a methyl group;

each AO independently represents an oxyalkylene group having 2 or more carbon atoms or a mixture of two or more thereof (when two or more oxyalkylene groups are used, the oxyalkylene groups may be added in a block form or random form) ; x represents a number of 0 to 2; y is 0 or 1; n represents an average oxyalkylene-group-addition mole number of 1 to 300; and $R^6$ represents a hydrogen atom or a hydrocarbon group having 1 to 20 carbon atoms].

Figure 1 illustrates a method of calculating the peak area ($P_0$) and the peak area ($Q_0$) in the present invention;
Figure 2 illustrates another method of calculating the peak area ($P_0$) and the peak area ($Q_0$) in the present invention;
Figure 3 shows the result of GPC measurement of the polymer (1) according to the present invention;
Figure 4 shows the result of GPC measurement of the polymer (2) according to the present invention;
Figure 5 shows the result of GPC measurement of the polymer (3) according to the present invention;
Figure 6 shows the result of GPC measurement of a comparative polymer (1); and
Figure 7 shows the result of GPC measurement of a comparative polymer (2).

In the present invention, the polycarboxylic acid polymer for the cement admixture is characterized in that a particular parameter [hereinafter, referred to as "$P_0$ parameter" in some cases: $(P_0 \times 100) / (P_0+Q_0)$ ] , which is defined by the results obtained by determining the molecular weight distribution of the polymer with gel permeation chromatography (GPC), is ranging from 15 to 45. The above $P_0$ parameter is defined by the following processes.

(Method of calculating parameter)

(1) A molecular weight distribution of the polycarboxylic acid polymer is determined by gel permeation chromatography to provide a molecular-weight distribution curve having an elution time on the horizontal axis,
(2) A base line is drawn on the molecular-weight distribution curve,
(3) An elution-starting time, an elution-ending time, and a peak-top time of a peak corresponding to the polymer component are determined respectively as Lh, Ln, and Mp,
(4) Lm is calculated according to the following Formula (1) :

$$Lm = (Ln+Mp)/2 \qquad (1),$$

and
(5) $P_0$ is defined as a peak area between the elution times Lm and Ln and $Q_0$ is defined as the peak area between the elution times Lh and Mp.

A smaller value of the parameter $P_0$ leads to higher ratio of high-molecular weight polymer and thus results in the poor dispersibility-retention of the cement composition to which the polymer is added. Thus, the lower limit of the value is preferably set to 15 (preferably 18, more preferably 20). A higher value leads to increase in the ratio of the low-molecular weight polymer and improves the dispersibility-retention of the cement composition, but an excessively higher value results in the poor dispersibility of the cement composition. Thus, the upper limit of the value is preferably 45 (preferably 43, more preferably 40, even more preferably 38, and particularly preferably 35). The dispersibility-retention in the present specification means change in dispersibility with time, and the lower dispersibility-retention means that the dispersibility of the cement composition is getting worse with time compared with the initial dispersibility.

Any one of known methods may be used for providing the molecular-weight distribution curve by GPC. Specifically, it is possible to draw the molecular-weight distribution curve by plotting the elution time on the horizontal axis and the value of change in the electrical resistance of the eluate coming out of column (hereinafter, referred to also as "resistance change value"), as determined by a differential refractometer, on the vertical axis (hereinafter, GPC measurement is performed in a similar manner in the present specification).

First, a base line is drawn in the molecular-weight distribution curve (2), and the elution-starting time, the elution-ending time, and the peak-top time are identified (3).

For example as shown in Figure 1, the base line is drawn straight to connect the regions 1 and 2 where no peak is observed. The peak-appearing time (elution-starting time) Lh and the peak-disappearing time (elution-ending time) Ln are then identified. As shown in Figure 2, it is occasionally not possible to identify the elution-ending time depending on polymerization condition, because there are peaks 3 and 4 different from those of the polymer (hereinafter, referred to as "noise peaks"], such as the peaks assigned to the decomposed products or the counter ion of the polymerization initiator used for the polymerization, in the vicinity of the elution-ending time. In such a case, the elution-ending time is defined as the time at the bottom point 5 of the valley between the peak assigned to the polymer and the noise peak. The peak-top time Mp means the elution time when the resistance change value is highest in the peak assigned to the polymer. If there are multiple points where the resistance change value is high in the peak, or multiple Mp's, the time at the point where the molecular-weight distribution curve is highest is defined at the peak-top time Mp.

Then, Lm is calculated by the following Formula (1) using the Ln and Mp thus determined (4).

$$Lm = (Ln+Mp)/2 \qquad (1).$$

Finally, the peak areas $P_0$ and $Q_0$ are determined using Lm, Ln, Lh, and Mp thus determined, and the value of the parameter $P_0$ is calculated (5).

The peak area $P_0$ means the peak area between the elution times Lm and Ln, specifically, the area of the low-molecular-weight-sided region 7 enclosed by the straight line drawn in parallel with the vertical axis at the elution time Lm, the molecular-weight distribution curve, and the base line. The peak area $Q_0$ means the peak area between the elution times Lh and Mp, specifically the area of the high-molecular-weight-sided region 6 enclosed by the straight line

drawn in parallel with the vertical axis at the elution time Mp, the molecular-weight distribution curve, and the base line.

If the polymer has a weight-average molecular weight (Mw) of 15,000 or more (preferably 20,000 or more, more preferably 25, 000 or more, and even more preferably 30,000 or more), the polymer can be used as a cement admixture to impart the sufficient dispersibility to the cement composition. However, an excessively high weight-average molecular weight may lead to the deterioration in dispersibility-retention, and thus the weight-average molecular weight is preferably 300,000 or less (more preferably 200,000 or less, more preferably 100,000 or less, and even more preferably 70,000 or less).

In addition, the polymer having a peak-top molecular weight of 15,000 or more (preferably 20,000 or more, more preferably 25, 000 or more, even more preferably 30, 000 or more, and particularly preferably 35,000 or more) can be used as a polymer for the cement admixture that imparts the sufficient dispersibility to the cement. However, an excessively high peak-top molecular weight may lead to the deterioration in dispersibility-retention, and thus the peak-top molecular weight is preferably 300,000 or less (more preferably 200,000 or less, more preferably 150,000 or less, even more preferably 100,000 or less, and particularly preferably 80,000 or less).

<<Polycarboxylic acid polymer for the cement admixture >>

The polycarboxylic acid polymer according to the present invention contains a constituent unit (I) in an amount of 2 to 90 wt%, represented by the following Chemical Formula (3):

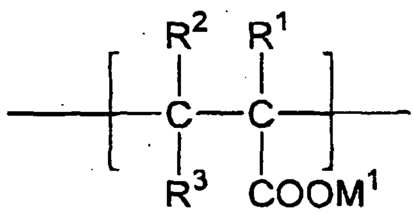

(3)

In the above Chemical Formula (3) above, $R^1$, $R^2$ and $R^3$ each independently represent a hydrogen atom, a methyl group, or $-(CH_2)_Z COOM^2$[$-(CH_2)_Z COOM^2$ may form an anhydride with $-COOM^1$ or another $-(CH_2)_z COOM^2$]; Z represents an integer of 0 to 2; and $M^1$ and $M^2$ each independently represent a hydrogen atom, an alkali metal atom, an alkali-earth metal atom, an ammonium group or an organic amine group.

The constituent unit (I) is the unit responsible for adsorption on cement. In order to impart the sufficient adsorption to cement particles, the constituent unit (1) is preferably contained in the polymer in an amount of 2 wt% or more (preferably 5 wt% or more, more preferably 7.5 wt% or more, more preferably 10 wt% or more, more preferably 12.5 wt% or more, more preferably 15 wt% or more, more preferably 20 wt% or more, and even more preferably 25 wt% or more).

However, if the constituent unit (I) is excessively contained, the content of the constituent unit (II) that has a function to impart the dispersibility to the cement particles in the polymer becomes low, and thus it is necessary to add the cement admixture in a large amount in order to obtain the cement composition having the sufficient fluidity. Thus, the upper limit of the content is 90 wt% (preferably 50 wt%, more preferably 40 wt%, more preferably 35 wt%, and even more preferably 30 wt%).

Further, the polymer contains a constituent unit (II) represented by the following Chemical Formula (4):

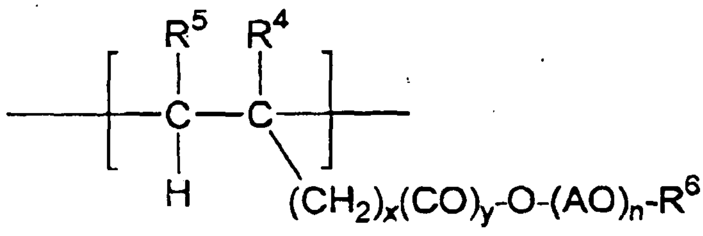

(4)

which has a function to disperse cement particles by the steric repulsion of its oxyalkylene groups, and a content of 2 wt% to 98 wt% in the polymer is preferable for the sufficient dispersion of the cement particles. In Chemical Formula (4) above, $R^4$ and $R^5$ each independently represent a hydrogen atom or a methyl group; each AO independently represents an oxyalkylene group having 2 or more carbon atoms or a mixture of two or more; x represents an integer of 0 to 2; y is

0 or 1; n represents an average oxyalkylene-group-addition mole number of 1 to 300; and $R^6$ represents a hydrogen atom or a hydrocarbon group having 1 to 20 carbon atoms. When the group (AO) contains two or more oxyalkylene groups having 2 or more carbon atoms, the oxyalkylene groups may be added in a block form or random form.

The constituent unit (II) is preferably contained in the polymer in an amount of 2 wt% or more (preferably 50 wt% or more, more preferably 60 wt% or more, more preferably 65 wt% or more, and even more preferably 70 wt% or more) , from the point of the advantageous effects described above. However, the increase in the content of the constituent unit (II) leads to the decrease in the content of the constituent unit (I) responsible for adsorption to cement particles, and thus it is not possible to obtain the cement composition having the sufficient fluidity, unless the admixture is added in a greater amount. Accordingly, the upper limit of the content is 98 wt% (preferably 95 wt%, more preferably 90 wt%, more preferably 85 wt%, and still more preferably 80 wt%).

In particular, it is necessary to raise the hydrophilicity of the oxyalkylene chain represented by $(AO)_n$ in order to improve the dispersibility of the cement, and thus it is preferable that the oxyalkylene chain predominantly comprises an oxyalkylene group having two carbon atoms.

The ratio (molar ratio) of the oxyalkylene group having 2 carbon atoms in the oxyalkylene chain of the constituent unit (II) is 50 mol % or more, preferably 60 mol % or more, more preferably 70 mol % or more, more preferably 80 mol % or more, more preferably 90 mol % or more, and even more preferably 100 mol %.

Further, in order to improve the properties of the concrete prepared by using the polymer of the present invention (e. g., reduction of the viscosity and the rigidity of concrete), it is preferable to provide the cement particles with some structure (network structure), by introducing an oxyalkylene group having 3 or more carbon atoms into the oxyalkylene chain of the constituent unit (II) and making the polymer hydrophobic to some extent. However, when an oxyalkylene group having 3 or more carbon atoms is introduced in an excessive amount, the resultant polymer becomes too hydrophobic and sometimes has low dispersibility of the cement. The content of the oxyalkylene group having 3 or more carbon atoms in the oxyalkylene chain of the constituent unit (II) is preferably 1 to 50 mol %, more preferably 3 to 40 mol %, and even more preferably 5 to 30 mol %. The oxyalkylene groups having 3 or more carbon atoms may be incorporated into the oxyalkylene chain of the constituent unit (II) in a random form or block form, but are preferably incorporated in a block form such as oxyalkylene chain having 3 or more carbon atoms-oxyalkylene chain having 2 carbon atoms-oxyalkylene chain having 3 or more carbon atoms.

The oxyalkylene group having 3 or more carbon atoms is preferably an oxyalkylene group having 3 to 8 carbon atoms, more preferably an oxypropylene group or an oxybutylene group having 3 to 4 carbon atoms, from the viewpoints of easiness of introduction and affinity with cement.

The average addition mole number of the oxyalkylene chain is preferably 1 to 300 moles, more preferably 2 to 250 moles, more preferably 4 to 200 moles, more preferably 6 to 150 moles, and even more preferably 8 to 100 moles.

The terminal group $R^6$ of the oxyalkylene chain preferably includes, for example, a hydrogen atom or a hydrocarbon group having 1 to 20 carbon atoms [examples thereof include alkyl groups having 1 to 20 carbon atoms (aliphatic or alicyclic alkyl groups), alkenyl groups having 1 to 20 carbon atoms, alkynyl groups having 1 to 20 carbon atoms, and aromatic moieties containing a benzene ring such as phenyl, alkylphenyl, phenylalkyl, naphthyl groups having 6 to 20 carbon atoms]. The terminal group is preferably hydrophilic to disperse the cement particles, and thus is preferably a hydrogen atom or a hydrocarbon group having 1 to 10 carbon atoms, more preferably a hydrogen atom or a hydrocarbon group having 1 to 5 carbon atoms, and even more preferably a hydrogen atom or a hydrocarbon group having 1 to 3 carbon atoms.

The kinds and the contents of the constituent units (I) and (II) may not be uniform in the polymer, and may be different from each other, for example, between in the high-molecular weight polymer and in the low-molecular weight polymer.

However, the difference in the contents of the constituent units (I) and/or (II) in the polymer is preferably kept 20 wt% or less (preferably 15 wt% or less and more preferably 10 wt% or less) by mass, because a greater difference in the contents of the constituent units (I) and/or (II) in the polymer (e.g., between in high-molecular weight polymer and in low-molecular weight polymer) makes it difficult to produce a cement composition having sufficient fluidity without adding the admixture in a greater amount. As for the "low-molecular weight polymer" and the "high-molecular weight polymer" in the present specification, the "low-molecular weight polymer" is a polymer located in the low-molecular weight side relative to Mp and the "high-molecular weight polymer" is a polymer located in the high-molecular weight side relative to Mp of the molecular-weight distribution curve. The difference in the content is determined, for example, by a method of determining molecular weight distribution by using a differential refractometer and a UV detector and calculating the composition from the ratio of detection intensities, or a method of fractionating the polymers based on their charge intensities by capillary electrophoresis for measurement.

The polymer having the characteristics described above may be prepared by using two or more of the polycarboxylic acid polymers according to the present invention different in the contents of the constituent units (I) and (II) in combination. In such a case, combined use of polycarboxylic acid polymers different in the content of the carboxyl group-containing constituent unit (I) is preferable. Because the polymer having the higher content of the carboxyl groups

is superior in cement dispersibility and the polymer having the lower content of the carboxyl groups is superior in dispersibility-retention, combined use of the polycarboxylic acid polymers according to the present invention may be more advantageous both in dispersibility and dispersibility-retention than single use. The polycarboxylic acid polymers to be added preferably have a difference in the constituent unit (I) content of 2 to 30 wt%, more preferably 2 to 20 wt%, and particularly preferably 2 to 10 wt%.

When the polycarboxylic acid polymer according to the present invention is used in combination with a second polycarboxylic acid polymer different from the polycarboxylic acid polymer according to the present invention, it is also preferable to use the polycarboxylic acid different in the carboxylic group content as described above. In such a case, the difference in the constituent unit (I) content is preferably 2 to 30 wt%, more preferably 2 to 20 wt%, and particularly preferably 2 to 10 wt%.

The polycarboxylic acid polymer according to the present invention is prepared preferably according to the following polymerization method.

<<Polymerization method for polycarboxylic acid polymer for the cement admixture>>

The method of producing the polycarboxylic acid polymer for the cement admixture comprises polymerizing a unsaturated monomer component containing a monomer represented by the following Chemical Formula (5) (hereinafter, referred to as "I-M") :

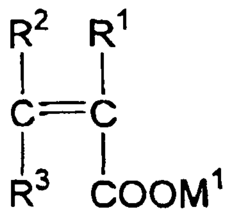

(5)

[wherein, $R^1$, $R^2$ and $R^3$ each independently represent a hydrogen atom, a methyl group, or $-(CH_2)_zCOOM^2$ [$-(CH_2)_zCOOM^2$ may form an anhydride with $-COOM^1$ or another $-(CH_2)_zCOOM^2$]; Z represents an integer of 0 to 2; and $M^1$ and $M^2$ each independently represent a hydrogen atom, an alkali metal atom, an alkali-earth metal atom, an ammonium group or an organic amine group]

in at least two steps where the amounts of a chain-transfer agent with respect to the unsaturated monomer components are different from each other,

wherein the amounts of the chain-transfer agent used with respect to the unsaturated monomer components are different from each other by 5 times or more between polymerization steps constituting the two steps.

Examples of the unsaturated monomers represented by I-M include a monocarboxylic acid monomer such as (meth)acrylic acid and crotonic acid; and a dicarboxylic acid monomer such as maleic acid, itaconic acid, and fumaric acid; and the anhydride or the salt thereof (for example, salts with a monovalent, divalent or trivalent metal, ammonium or an organic amine). Among them, acrylic acid, methacrylic acid, maleic acid, maleic anhydride (among them, acrylic acid and methacrylic acid are more preferable) and the salts thereof are preferable from the viewpoint of polymerization efficiency. These monomers may be used in combination of two or more.

In the above polymerization method, since the ratio of the chain-transfer agent to the monomer component is changed significantly in the multi-step process for production of the polymer, the polymers obtained before and after change in the ratio are different in molecular weight and thus the polymer having the broad molecular weight distribution will be obtained. Further, it is possible to obtain a polymer having the broader molecular weight distribution, i.e., having a parameter $P_0$ of 15 or more and 45 or less, easily by changing the ratio of the chain-transfer agent in the polymerization method by five times or more (preferably, 5.5 times or more, and more preferably six times or more). However, a further higher ratio of chain-transfer agent at 20 times or more (alternatively, 18 times or more, 15 times or more, or in particular 13 times or more) leads to the excessively broad molecular weight distribution with a parameter $P_0$ outside the above range and thus the advantageous effects of the present invention is not obtained.

The number of the polymerization steps is not limited to two, and may be changed depending upon the desirable properties of the polymer, but the polymerization is carried out preferably in two steps. In such a case, the amount of the chain-transfer agent may be 0.1 mol % or more and 10 mol % or less in the first step and 3 mol % or more and 30 mol % or less in the second step with respect to the mole number of the monomer components in mole percent.

With respect to the method of adding the chain-transfer agent, the chain-transfer agent, the monomer component, and a polymerization initiator described below may be added separately in a reaction container and the polymerization is conducted while stirring, or alternatively, the monomer component and the chain-transfer agent are first mixed,

the mixture is then added together with the polymerization initiator in the reaction container and the polymerization is conducted while stirring.

The amount of the chain-transfer agent added may be changed depending upon the object, as long as the change in the ratio between the polymerization steps is less than five times or less. In addition, the kinds of the chain-transfer agent and/or the unsaturated monomer component used in each polymerization step are not necessarily same, and may be changed in each polymerization step.

As the chain-transfer agent, well known hydrophilic chain-transfer agents can be used. Examples of the chain-transfer agents include a thiol chain-transfer agent such as mercaptoethanol, thioglycerol, thioglycolic acid, 3-mercaptopropionic acid, thiomalic acid, and 2-mercaptoethanesulfonic acid; a secondary alcohol such as isopropyl alcohol; and a low class of oxide and the salts thereof including phosphorous acid, hypophosphorous acid, and the salts thereof (sodium hypophosphite, potassium hypophosphite, etc.), and sulfurous acid, bisulfurous acid, and dithionic acid, metabisulfurous acid and the salts thereof (such as sodium sulfite, sodium hydrogensulfite, sodium dithionite, and sodium metabisulfite); and the like. A hydrophobic chain-transfer agent is preferably used for further improvement in the viscous behavior of the cement composition. Examples of the hydrophobic chain-transfer agents preferably used include a thiol chain-transfer agent containing a hydrocarbon group having 3 or more carbon atoms such as butanethiol, octanethiol, decanethiol, dodecanethiol, hexadecanethiol, octadecanethiol, cyclohexylmercaptan, thiophenol, octyl thioglycolate, and octyl 3-mercaptopropionate. The chain-transfer agents may be used in combination of two or more, and, for example, a hydrophilic chain-transfer agent and a hydrophobic chain-transfer agent may be used in combination. In addition, use of the monomer having higher chain-transfer effect such as (meth)allylsulfonic acid (or its salt) is effective in adjusting the molecular weight.

In the method of producing the polymer for the cement admixture according to the present invention, it is possible, by adding an unsaturated monomer component represented by the following Chemical Formula (6) (hereinafter, referred to also as "III-M") as the unsaturated monomer component, to obtain a polymer having a function to disperse cement particles by steric repulsion of the oxyalkylene group in III-M.

The unsaturated monomer component is a monomer represented by the following Chemical Formula (6):

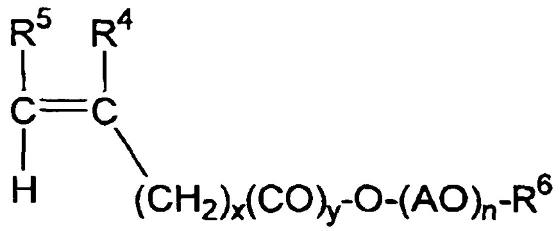

(6)

[wherein, $R^4$ and $R^5$ each independently represent a hydrogen atom or a methyl group; each AO independently represents an oxyalkylene group having 2 or more carbon atoms or a mixture of two or more thereof (when two or more oxyalkylene groups are used, the oxyalkylene groups may be added in a block form or random form); x represents a number of 0 to 2; y is 0 or 1; n represents an average addition mole number of the oxyalkylene group of 1 to 300 (preferably 2 to 250, more preferably 4 to 200, more preferably 6 to 150, particularly preferably 8 to 100); and $R^6$ represents a hydrogen atom or a hydrocarbon group having 1 to 20 carbon atoms].

Examples of the unsaturated monomer component (III-M) are a saturated aliphatic alcohol having 1 to 20 carbon atoms such as methanol, ethanol, 1-propanol, 2-propanol, 1-butanol, 2-butanol, 1-pentanol, 1-hexanol, octanol, 2-ethyl-1-hexanol, nonyl alcohol, lauryl alcohol, cetyl alcohol, and stearyl alcohol; an unsaturated aliphatic alcohol having 3 to 20 carbon atoms such as allyl alcohol, metharyl alcohol, crotyl alcohol, and oleyl alcohol; an alicyclic alcohol having 3 to 20 carbon atoms such as cyclohexanol; an alkoxypolyalkylene glycol obtained by adding an alkyleneoxide having 2 to 18 carbon atoms to any one of an aromatic alcohol having 6 to 20 carbon atoms such as phenol, phenylmethanol (benzyl alcohol), methylphenol (cresol), p-ethylphenol, dimethylphenol (xylenol), nonylphenol, dodecylphenol, phenylphenol, or naphthol; and an ester of a polyalkylene glycol obtained by polymerization of an alkyleneoxide having 2 to 18 carbon atoms with (meth)acrylic acid, crotonic acid, or the like; and these compounds may be used alone or in combination of two or more. Among them, the ester of an alkoxypolyalkylene glycol with (meth) acrylic acid are preferable. In addition, it is possible to use compounds obtained by adding 1 to 300 moles of an alkyleneoxide to an unsaturated alcohol such as vinyl alcohol, (meth)allyl alcohol, 3-methyl-3-butene-1-ol, 3-methyl-2-butene-1-ol, 2-methyl-3-butene-2-ol, 2-methyl-2-butene-1-ol, or 2-methyl-3-butene-1-ol; and these compounds may be used alone or in combination of two or more. Among these monomers, compounds using (meth)allyl alcohol or 3-methyl-3-butene-1-ol are preferable. The alkyleneoxide added in the unsaturated esters and ethers may be any one or more of alkyleneoxides selected from alkyleneoxides having 2 to 18 carbon atoms including ethyleneoxide, propyleneoxide, butyleneoxide, and styreneoxide.

When two or more alkyleneoxides are used, they may be polymerized by any one of random addition, block addition, and alternating addition.

The unsaturated monomer component (III-M) is added in an amount of 2 parts or more (preferably 60 parts or more, more preferably 100 parts or more, more preferably 150 parts or more, more preferably 230 parts or more, more preferably 400 parts or more, more preferably 500 parts or more, still more preferably 900 parts or more, and still more preferably 1,900 parts or more) and 4,900 parts or less (preferably 3, 000 parts or less and more preferably 2,000 parts or less) by mass with respect to 100 parts of the unsaturated monomer component (I-M) described above.

The III-M and I-M are components different from each other, and examples of the unsaturated monomer components (II-M) copolymerizable with III-M and I-M include a monoester and a diester of an unsaturated dicarboxylic acid such as maleic acid, fumaric acid, itaconic acid, or citraconic acid, with an alkyl alcohol having 1 to 20 carbon atoms, a glycol having 2 to 18 carbon atoms, a polyalkylene glycol having an addition mole number of 2 to 300, derived from the above glycol, or an alkoxy polyalkyleneoxide derived from an alkyl alcohol having 1 to 20 carbon atoms with an alkyleneoxide having 2 to 18 carbon atoms or an alkyleneoxide having an addition mole number of 2 to 300; a monoamide and a diamide derived from the above acid with an alkylamine having 1 to 20 carbon atoms, a one end aminated product of a glycol having 2 to 18 carbon atoms, or a one end aminated product of a polyalkylene glycol having an addition mole number of 2 to 300, derived from the above glycol; esters of an unsaturated monocarboxylic acid such as (meth)acrylic acid or crotonic acid with an alkyl alcohol having 1 to 20 carbon atoms, a glycol having 2 to 18 carbon atoms, a polyalkylene glycol having an addition mole number of 2 to 300, derived from the above glycol, or an alkoxy polyalkylene glycol derived from an alkyl alcohol having 1 to 20 carbon atoms with an alkyleneoxide having 2 to 18 carbon atoms or an alkyleneoxide having an addition mole number of 2 to 300; or an amide derived from the above acid with an alkylamine having 1 to 20 carbon atoms, a one end aminated product of a glycol having 2 to 18 carbon atoms, or a one end aminated products of the polyalkylene glycol having an addition mole number of 2 to 300, derived from the above glycol; an unsaturated sulfonic acid derivative such as sulfoethyl (meth)acrylate, 2-methylpropanesulfonic (meth) acrylamide, and styrenesulfonic acid, and the monovalent and divalent metal salts, ammonium salt and organic amine salts thereof; unsaturated amides such as (meth)acrylamide, and (meth) acrylic alkylamide; unsaturated aminated compounds such as dimethylaminoethyl (meth)acrylate; vinyl esters such as vinyl acetate and vinyl propionate; vinyl ethers including alkyl vinyl ethers having 3 to 20 carbon atoms such as methylvinylether, ethylvinylether, propylvinylether, and butylvinylether; and aromatic vinyl compounds such as styrene; and the like, and these compounds may be used alone or in combination of two or more.

In copolymerization of the unsaturated monomers (I-M), (III-M), and (II-M) for preparation of the polymer, the ratio of these unsaturated monomers (I-M)/(III-M)/(II-M) is preferably 2 to 90 mass%/50 to 98 mass%/0 to 50 mass% (preferably 2 to 90 mass%/2 to 98 mass%/0 to 50 mass%, more preferably 5 to 50 mass%/50 to 95 mass%/0 to 50 mass %, and still more preferably 10 to 30 mass%/70 to 90 mass%/0 to 50 mass%), with respect to 100% of the total amount.

It is preferable to conduct the polymerization reaction stably during polymerization, to make the molecular weight of the resultant copolymer reproducible. Thus, in solution polymerization, it is preferable to reduce the dissolved oxygen concentration in the solvent used at 25°C to as low as 5 ppm or less (preferably in the range of 0.01 to 4 ppm, more preferably 0.01 to 2 ppm, and most preferably 0.01 to 1 ppm). When the dissolved oxygen is displaced with nitrogen after the addition of the unsaturated monomer into a solvent, the dissolved oxygen concentration in the system including the unsaturated monomer is controlled within the above range.

The dissolved oxygen concentration in the solvent may be adjusted in the polymerization reaction tank, or a solvent of which the dissolved oxygen content is previously adjusted may be used. For example, the method for removing oxygen from the solvent include any one of the followings (1) to (5):

(1) An inert gas such as nitrogen is supplied into a tightly sealed container containing a solvent under the increased pressure, and the pressure in the tightly sealed container is reduced, to lower the partial pressure of oxygen in the solvent. At that time, the pressure of the tightly sealed container may be lowered under a nitrogen stream.
(2) The gaseous portion of the container containing a solvent is displaced with an inert gas such as nitrogen, and the liquid phase is stirred vigorously for an extended period.
(3) A stream of an inert gas such as nitrogen is supplied into a solvent charged in a container (bubbling) for an extended period of time.
(4) After bring the solvent to a boil once, the solvent is cooled under the atmosphere of an inert gas such as nitrogen.
(5) A solvent is mixed with an inert gas such as nitrogen with a static mixer installed in the piping during transportation of the solvent to the polymerization reaction tank.

The copolymerization of the unsaturated monomers (I-M), (II-M) and (I II -M) may be performed, for example, by solution polymerization or bulky polymerization.

The solution polymerization may be carried out in a batch or continuously, and examples of the solvents for use then include water; an alcohol such as methyl alcohol, ethyl alcohol, and isopropyl alcohol; an aromatic or aliphatic

hydrocarbon such as benzene, toluene, xylene, cyclohexane, and n-hexane; an ester compound such as ethyl acetate; a ketone compound such as acetone and methylethylketone; a cyclic ether compound such as tetrahydrofuran and dioxane; and the like.

In aqueous solution polymerization, a water-soluble polymerization initiator is used as the radical polymerization initiator; and examples thereof include a persulfate salt such as ammonium persulfate, sodium persulfate, and potassium persulfate; hydrogen peroxide; a water-soluble azo initiator including an azo amidine compound such as 2,2'-azobis-2-methylpropionamidine hydrochloride salt, a cyclic azo amidine compound such as 2,2'-azobis-2-(2-imidazolin-2-yl)propane hydrochloride salt, and an azo nitrile compound such as 2-carbamoylazoisobutyronitrile; and the like. At the time, an accelerator (reducing agent) may be used additionally, and examples thereof include alkali metal sulfite salts such as sodium hydrogen sulfite, metabisulfite salts, sodium hypophosphite, Fe (II) salts such as Mohr's salts, sodium hydroxymethanesulfinate dihydrate, hydroxylamine hydrochloride salts, thiourea, L-ascorbic acid (salts), erythorbic acid (salts), and the like. Among them, combination of hydrogen peroxide and an organic reducing agent is preferably, and the organic reducing agent preferably used is L-ascorbic acid (salt), L-ester ascorbate, erythorbic acid (salt), ester erythorbate, or the like. These radical polymerization initiators and the accelerators (reducing agents) may be used alone or in combination of two or more.

In solution or bulk polymerization by using a lower alcohol, an aromatic or aliphatic hydrocarbon, an ester compound, or a ketone compound as the solvent, a peroxide such as benzoyl peroxide, lauroyl peroxide, or sodium peroxide; a hydroperoxide such as t-butyl hydroperoxide or cumene hydroperoxide; an azo compound such as azobisisobutyronitrile; or the like is preferably used as the radical polymerization initiator. Combined use with an accelerator such as an amine compound then is also favorable. Further, when a mixed solvent of water and a lower alcohol is used, the radical initiator can be selected properly from various radical polymerization initiators or various combinations of a radical polymerization initiator and an accelerator.

The polymerization temperature is determined depending upon the solvent and radical polymerization initiator used, but preferably 0 to 150°C, more preferably 30 to 120°C, and more preferably 50 to 100°C. The handling of the polymer obtained by the copolymerization will be easy when stored in an aqueous solution in a pH range of weakly acidic (more preferably pH 4 or more, more preferably pH 5 or more, and most preferably pH 6 or more). On the other hand, copolymerization reaction at pH of 7 or more results in lower polymerization rate and lower copolymerization, and thus the dispersibility will be lowered.

Accordingly, it is preferable to perform the copolymerization reaction in a pH range of acidic to neutral (more preferably lower than pH 6, more preferably lower than pH 5.5, and most preferably lower than pH 5). Examples of the polymerization initiators preferable for making a polymerization system at pH of 7.0 or less include a persulfate acid salt such as ammonium persulfate, sodium persulfate, and potassium persulfate and a water soluble azo initiator such as an azo amidine compound including azobis-2-methylpropionamidine hydrochloride salt; and hydrogen peroxide or combined use of hydrogen peroxide and an organic reducing agent. Accordingly, it is preferable to adjust the solution to higher pH by adding an alkaline substance or the like after the copolymerization reaction is conducted at low pH. Typical methods for that purpose include, for example, a method of carrying out the copolymerization reaction at pH of lower than 6 and subsequently adjusting the pH to 6 or higher by addition of an alkaline substance, a method of carrying out the copolymerization reaction at pH of lower than 5 and subsequently adjusting the pH to 5 or higher by addition of an alkaline substance, a method of carrying out the copolymerization reaction at pH of lower than 5 and subsequently adjusting the pH to 6 or higher by addition of an alkaline substance. Adjustment of pH can be conducted, for example, by using an alkaline substance such as an inorganic salt, for example, a hydroxide or carbonate salt of monovalent or divalent metal; ammonia; an organic amine; or the like. When lowering pH, in particular pH adjustment during polymerization is needed, it is possible to adjust pH by using an acidic substance such as phosphoric acid, sulfuric acid, nitric acid, alkylphosphoric acid, alkyl sulfuric acid, alkylsulfonic acid, or (alkyl)benzenesulfonic acid; and among the acidic substances above, phosphoric acid is preferable because it has a pH-buffering action, and sulfuric acid is also preferable because it allows reduction of pH by addition in a small amount. The concentration may also be adjusted after reaction if necessary.

(Cement admixture)

The cement admixture according to the present invention is characterized in containing the polycarboxylic acid polymer for the cement admixture described above.

It is possible to obtain a cement composition having significant water reduction and a sufficiently high dispersibility-retention, by adjusting the total content of the polymer at 50 wt% or more (preferably 60 wt% or more, still more preferably 70 wt% or more, and most preferably 80% or more) with respect to the entire cement admixture.

In the cement admixture according to the present invention, it is also preferable to use the polymer according to the present invention and a second polycarboxylic acid polymer different from the polymer according to the present invention in combination. The blending ratio (by mass) of the polymer according to the present invention/ the second polymer different from the polymer according to the present invention, is preferably 90/10 to 10/90 (preferably 80/20 to

20/80, more preferably 70/30 to 30/70, and even more preferably 60/40 to 40/60).

It is also preferable to add a polyalkyleneimine alkyleneoxide adduct in addition to the polymer for the cement admixture according to the present invention.

The polyalkyleneimine alkyleneoxide adduct is preferably a polyalkyleneimine alkyleneoxide adduct containing an oxyalkylene group having 3 or more carbon atoms as its essential component. The polyalkyleneimine alkyleneoxide adduct containing an oxyalkylene group having 3 or more carbon atoms as its essential component is not particularly limited, as long as it contains an oxyalkylene group having 3 or more carbon atoms, and may or may not have a polymerizable unsaturated double bond. These polyalkyleneimine alkyleneoxide adducts may be used in combination.

The polyalkyleneimine alkyleneoxide adduct containing a polymerizable unsaturated double bond and an oxyalkylene group having 3 or more carbon atoms as its essential component is preferably a polyalkyleneimine alkyleneoxide adduct containing an oxyalkylene group having 3 or more carbon atoms as its essential component among the polyalkyleneimine alkyleneoxide adduct monomers described below.

The polyalkyleneimine alkyleneoxide adduct having no polymerizable unsaturated double bond is preferably a compound obtained by adding an alkyleneoxide to a nitrogen atom in the amino or imino group of a polyalkyleneimine. Each of the nitrogen atoms in the amino and imino groups to which the alkyleneoxide is added has an active hydrogen atom.

The above oxyalkylene groups includes at least an oxyalkylene group having 3 or more carbon atoms, and when two or more oxyalkylene groups are present in a single adduct, the oxyalkylene groups may be connected to each other in any one of random addition, block addition, alternating addition, and the like.

The polyalkyleneimine is preferably a homopolymer or a copolymer of an alkyleneimine and is obtained by polymerization of one or more of alkyleneimines having 2 to 8 carbon atoms such as ethyleneimine, propyleneimine, 1,2-butylene imine, 2,3-butylene imine, 1,1-dimethylethyleneimine, and the like. These polyalkyleneimines may be used alone or in combination of two or more. The polyalkyleneimine chain of the polyalkyleneimine alkyleneoxide adduct containing an oxyalkylene group having 3 or more carbon atoms as the essential component is formed with such a polyalkyleneimine, and the polyalkyleneimine chain may have any one of straight-chain, branched, and three-dimensionally crosslinked structures. It may be ethylenediamine, diethylenetriamine, triethylenetetramine, tetraethylenepentamine, or the like.

Such a polyalkyleneimine normally contains primary amino and secondary amino (imino) groups each having an active hydrogen atom in addition to a tertiary amino group in its structure.

The alkyleneoxide added to the polyalkyleneimine is not limited, as long as it has at least one oxyalkylene group having 3 or more carbon atoms added. Examples thereof include structures formed with an alkyleneoxide having 2 to 8 carbon atoms such as ethyleneoxide, propyleneoxide, butyleneoxide, isobutyleneoxide, 1-buteneoxide, 2-buteneoxide, trimethylethyleneoxide, tetramethyleneoxide, tetramethylethyleneoxide, butadienemonooxide, or octyleneoxide; an aliphatic epoxide such as dipentane ethyleneoxide or dihexane ethyleneoxide; an alicyclic epoxide such as trimethyleneoxide, tetramethyleneoxide, tetrahydrofuran, tetrahydropyran, or octyleneoxide; an aromatic epoxide such as styreneoxide or 1,1-diphenylethyleneoxide; or the like. These may be used alone or in combination of two or more. In particular, adducts of ethyleneoxide and propyleneoxide and adducts of ethyleneoxide and butyleneoxide are preferable, because they provide a cement composition superior in the balance among water reduction, slump resistance, improvement in strength, and reduction of air quantity, when used as a cement admixture.

The polyalkyleneimine alkyleneoxide adduct containing an oxyalkylene group having 3 or more carbon atoms as the essential component contains a polyalkyleneimine chain, which is preferably formed mainly from ethyleneimine. In such a case, the term "mainly" means ethyleneimine occupies most of the entire alkyleneimines by mole number, when the polyalkyleneimine chain is formed with two or more alkyleneimines. Such a configuration results in improvement in hydrophilicity of the adduct and gives sufficient operational advantages.

The phrase "most by mole number" means that ethyleneimine is contained in an amount of 50 to 100 mol % in 100 mol % of the entire alkyleneimine. An ethyleneimine mole number of less than 50 mol % may lead to deterioration in the hydrophilicity of the polyalkyleneimine chain. It is more preferably 60 mol % or more, more preferably 70 mol % or more, particularly preferably 80 mol % or more, and most preferably 90 mol % or more.

In the polyalkyleneimine alkyleneoxide adduct containing an oxyalkylene group having 3 or more carbon atoms as the essential component, the average polymerization number of alkyleneimines per polyalkyleneimine chain is preferably 2 or more and 300 or less. The polymerization number of less than 2 may result in insufficient performance of the adduct, while a polymerization number of more than 300 may result in decrease in the polymerization degree of the adduct. The polymerization number is particularly preferably 3 or more, and is also preferably 200 or less, more preferably 100 or less, even more preferably 75 or less, and most preferably 50 or less. In such a case, the average polymerization number of diethylenetriamines is 2, and that of triethylenetetramines is 3.

In the polyalkyleneimine alkyleneoxide adduct containing the oxyalkylene group having 3 or more carbon atoms as the essential component, the average addition mole number of the oxyalkylene groups is preferably more than 0 and 300 or less. A mole number of more than 300 may lower the polymerization of the monomer. The mole number is

preferably 0.5 or more, more preferably 1 or more, even more preferably 3 or more, and most preferably 5 or more. The mole number is also preferably 270 or less, more preferably 250 or less, even more preferably 220 or less, and most preferably 200 or less.

When the average addition mole number of the oxyalkylene groups in the adduct is outside the range above, there may be not sufficient operational advantage of improving the fluidity of the cement composition or the like. The average addition mole number means an average mole number of added alkylene groups in one mole of the group formed by the oxyalkylene groups in the adduct, or an average mole number of the oxyalkylene groups added to one mole of the nitrogen atom having an active hydrogen atom in the adduct-forming polyalkyleneimine.

The weight-average molecular weight of the polyalkyleneimine alkyleneoxide adduct containing an oxyalkylene group having 3 or more carbon atoms as the essential component is preferably 300 or more and 100,000 or less. The weight-average molecular weight is preferably 400 or more, more preferably 500 or more, even more preferably 600 or more, and particularly preferably 1,000 or more. The weight-average molecular weight is also more preferably 50, 000 or less and even more preferably 30,000 or less.

When the polymer according to the present invention, the second polycarboxylic acid polymer different from the polymer according to the present invention, and a polyalkyleneimine alkyleneoxide adduct are contained, the content ratio (by mass) thereof, the polymer according to the present invention/the second polycarboxylic acid polymer different from the polymer according to the present invention/the polyalkyleneimine alkyleneoxide adduct, is preferably 10 to 80/10 to 89/1 to 80 (preferably 15 to 70/20 to 84/1 to 65, more preferably 20 to 60/30 to 77/3 to 50, and most preferably 20 to 50/40 to 75/5 to 40).

In the cement admixture according to the present invention, it is also preferable to use an oxyalkylene-based defoamer described below.

Typical examples of the defoamers include a polyoxyalkylene such as (poly)oxyethylene (poly)oxypropylene adducts; a polyoxyalkylene alkylether such as oxyethylene oxypropylene adducts of diethylene glycol heptylether, polyoxyethylene oleylether, polyoxypropylene butylether, polyoxyethylene polyoxypropylene 2-ethylhexylether, or a higher alcohol having 12 to 14 carbon atoms; a polyoxyalkylene (alkyl)arylether such as polyoxypropylene phenylether and polyoxyethylene nonylphenylether; an acetylene ether such as alkyleneoxide adducts of an acetylene alcohol such as 2,4,7,9-tetramethyl-5-decyn-4,7-diol, 2,5-dimethyl-3-hexyn-2,5-diol, or 3-methyl-1-butyn-3-ol; a (poly)oxyalkylene fatty acid ester such as diethylene glycol oleic ester, diethylene glycol laurylic ester, and ethylene glycol distearate; a polyoxyalkylene sorbitan fatty ester such as polyoxyethylene sorbitan monolauric ester and polyoxyethylene sorbitan trioleate; a polyoxyalkylene alkyl(aryl)ether sulfate ester salt such as sodium polyoxypropylene methylether sulfate and sodium polyoxyethylene dodecylphenylether sulfate; a polyoxyalkylene phosphoric alkyl ester such as polyoxyethylene stearyl phosphate; a polyoxyalkylene alkylamine such as polyoxypropylene polyoxyethylene laurylamine (1 to 20-mole propyleneoxide adduct, 1 to 20-mole ethyleneoxide adduct, etc.) and alkyleneoxide adducts of hardened beef tallow amine (1 to 20-mole propyleneoxide adduct, 1 to 20-mole ethyleneoxide adduct, etc.); polyoxyalkylene amides; and the like. These defoamers may be used alone or in combination of two or more. The defoamer may be added any time before, during or after polymerization. The addition amount is preferably 0.0001 to 10 mass % with respect to the entire weight of the polymer for the cement admixture.

The cement admixture according to the present invention may be used together with any one of known cement admixtures or together with multiple known cement admixtures. As the known cement admixtures that can be used together with, preferably used are a polycarboxylic acid-base admixture and a sulfonic acid-based admixture (S) having a sulfonic acid group in the molecule known to the public, because they show stabilized dispersibility, independently of the brand or lot number of the cement.

The sulfonic acid-based admixture (S) is the admixture that imparts the dispersibility to cement mainly by the electrostatic repulsion of the sulfonic acid group therein, and any one of known various sulfonic acid-based admixtures may be used, but the compound having an aromatic group in the molecule is preferable.

Typical examples thereof include various sulfonic acid-based admixtures including a polyalkylarylsulfonate salt such as naphthalenesulfonic acid formaldehyde condensate, methylnaphthalenesulfonic acid formaldehyde condensate, and anthracenesulfonic acid formaldehyde condensate; a melamine formalin resin sulfonate salt such as melamine formaldehyde sulfonate condensate; an aromatic aminosulfonate salt such as aminoarylsulfonic acid-phenol-formaldehyde condensate; a lignin sulfonate salt such as a lignin sulfonate salt and a modified lignin sulfonate salt; a polystyrenesulfonic acid salt; and the like. Lignin sulfonate salt-based admixtures are preferably used for the concrete having a higher water/cement ratio; while admixtures such as the polyalkylarylsulfonate salt, the melamine formalin resin sulfonate salt, the aromatic aminosulfonate salt, the polystyrenesulfonate salt are preferably used for the concrete having the medium water/cement ratio that demand the higher dispersibility. Two or more sulfonic acid-based admixtures (S) having a sulfonic acid group in the molecule may be used in combination.

It is also preferable that an oxycarboxylic acid-based compound (D) is added in addition to the sulfonic acid-based admixture (S), because the mixture retains its higher dispersibility even under high-temperature environment.

Preferable examples of the oxycarboxylic acid-based compounds (D) include an oxycarboxylic acid having 4

to 10 carbon atoms or the salt thereof; and typical examples thereof include gluconic acid, glucoheptonic acid, arabonic acid, malic acid, and citric acid, inorganic and organic salts thereof such as sodium, potassium, calcium, magnesium, ammonium, and triethanolamine salts, and the like. Among them, use of gluconic acid or the salt thereof is preferable. These may be used alone or in combination of two or more. In particular, a lignin sulfonate salt-based admixture is preferably used as the sulfonic acid-based admixture having a sulfonic acid group in the molecule (S) and gluconic acid or the salt thereof as the oxycarboxylic acid-based compound (D) in the lean mix concrete.

In addition, publicly-known cement admixtures exemplified as (1) to (11) below may be used in combination:

(1) Water-soluble polymeric substances: unsaturated polymer carboxylates such as polyacrylic acid (sodium), polymethacrylic acid (sodium), polymaleic acid (sodium), and sodium salt of acrylic acid-maleic acid copolymer; nonionic cellulose ethers such as methylcellulose, ethylcellulose, hydroxymethylcellulose, hydroxyethylcellulose, carboxymethylcellulose, carboxyethylcellulose, and hydroxypropylcellulose; polysaccharide derivatives wherein part or all of the hydroxyl-group hydrogen atoms in the alkylated or hydroxyalkylated derivative of a polysaccharide such as methylcellulose, ethylcellulose, hydroxyethylcellulose, or hydroxypropylcellulose are substituted with an ionic hydrophilic substituent group containing a hydrophobic substituent group having a hydrocarbon chain having 8 to 40 carbon atoms as its partial structure and a sulfonic acid group or the salt thereof as its partial structures; polysaccharides prepared by microbial fermentation such as yeast glucan, xanthan gum, β-1,3-glucans (straight- or branched-chained, such as curdlan, paramylum, pachyman, scleroglucan, laminaran, etc.); polyacrylamide; polyvinylalcohol; starch; starch phosphate esters; sodium alginate; gelatin; acrylic acid copolymers having amino groups in the molecule and the quaternary compounds thereof; and the like.

(2) Polymer emulsions: various copolymers of a vinyl monomer such as alkyl(meth)acrylate, and the like.

(3) Hardening retarders other than oxycarboxylic acid-based compounds (D): saccharides including monosaccharides such as glucose, fructose, galactose, saccharose, xylose, apiose, ribose, and isomerized sugar, oligosaccharides such as disaccharides, trisaccharides and dextrins, polysaccharides such as dextrans, and syrups containing the saccharides above; sugar alcohols such as sorbitol; magnesium silicofluoride; and phosphoric acid and the salts thereof or boric esters; aminocarboxylic acids or the salts thereof; alkali-soluble proteins; humic acid; tannic acid; phenol; polyvalent alcohols such as glycerol; phosphonic acid or the derivatives thereof such as aminotri(methylenephosphonic acid), 1-hydroxyethylidene-1,1-diphosphonic acid, ethylenediaminetetra(methylenephosphonic acid), diethylenetriaminepenta(methylenephosphonic acid) or the alkali-metal and alkali-earth metal salts thereof; and the like.

(4) Hardening and other accelerators: soluble calcium salts such as calcium chloride, calcium nitrite, calcium nitrate, calcium bromide, and calcium iodide; chloride salts such as iron chloride and magnesium chloride; sulfate salts; potassium hydroxide; sodium hydroxide; carbonate salts; thiosulfate salts; formic acid and formate salts such as calcium formate; alkanol amine; alumina cements; calcium aluminate silicate; and the like.

(5) Defoamers other than oxyalkylene-based compounds:

mineral-oil defoamers such as kerosene and liquid paraffin;

oily defoamers such as animal and vegetable oils, sesame oil, castor oil, and the alkyleneoxide adducts thereof;

fatty defoamers such as oleic acid, stearic acid, and the alkyleneoxide adducts thereof; fatty acid ester defoamers such as glycerol monoricinolate, alkenylsuccinic acid derivatives, sorbitol monolaurate, sorbitol tri oleate, and natural waxes;

alcohol defoamers such as octyl alcohol, hexadecyl alcohol, acetylene alcohol, and glycols; amide defoamers such as acrylate polyamine; phosphoric ester defoamers such as tributyl phosphate and sodium octylphosphate; metal soap defoamers such as aluminum stearate and calcium oleate; silicone defoamers such as dimethylsilicone oil, silicone pastes, silicone emulsions, organic-modified polysiloxanes (polyorganosiloxanes such as dimethylpolysiloxane);

fluorosilicone oils; and the like.

(6) AE agents (Air Entraining Agent): resin soaps, saturated or unsaturated fatty acids, sodium hydroxystearate, lauryl sulfate, ABS's (alkylbenzenesulfonic acids), LAS's (straight-chain alkylbenzenesulfonic acid), alkanesulfonates, polyoxyethylene alkyl(phenyl)ethers, polyoxyethylene alkyl(phenyl)ether sulfate esters or the salts thereof, polyoxyethylene alkyl(phenyl)ether phosphate esters or the salts thereof, protein materials, alkenylsulfoscuccinic acids, α-olefin sulfonates, and the like.

(7) Others surfactants: aliphatic monovalent alcohols having 6 to 30 carbon atoms in the molecule such as octadecyl alcohol and stearyl alcohol, monovalent alicyclic alcohols having 6 to 30 carbon atoms in the molecule such as abietyl alcohol, monovalent mercaptans having 6 to 30 carbon atoms in the molecule such as dodecylmercaptan; alkylphenols having 6 to 30 carbon atoms in the molecule such as nonylphenol, amines having 6 to 30 carbon atoms in the molecule such as dodecylamine, polyalkyleneoxide derivatives wherein 10 moles or more of an alkyleneoxide

such as ethyleneoxide or propyleneoxide is added to a carboxylic acid having 6 to 30 carbon atoms in the molecule such as lauric acid or stearic acid; alkyl diphenylether sulfonate salts wherein two sulfone group-containing phenyl groups that may have an alkyl or alkoxy group as the substituent group are bound to each other via an ether bond; various anionic surfactants; various cationic surfactants such as alkylamine acetates and alkyl trimethylammonium chlorides; various nonionic surfactants; various amphoteric surfactants; and the like.

(8) Waterproof agents: fatty acids (salts), fatty acid esters, oils, silicones, paraffins, asphalt, waxes, and the like.

(9) Antirusts: nitrite salts, phosphate salts, zinc oxide, and the like.

(10) Cracking inhibitor: polyoxyalkylethers and the like.

(11) Expansive additives: ettringite-based and coal-based additives, and the like.

In addition to the additives (1) to (11) above, known cement admixtures such as cement wetting agent, thickener, separation inhibitor, coagulant, drying-shrinkage inhibitor, strength improver, self-leveling agent, antirust, colorant, and fungicide may be added alone or in combination of two or more.

Particularly preferable embodiments of the cement admixture according to the present invention are the followings (1) to (4) :

(1) Combination essentially of two components: the cement admixture according to the present invention and an oxyalkylene-based defoamer. Examples of the oxyalkylene-based defoamers include those of polyoxyalkylenes, polyoxyalkylene alkylethers, polyoxyalkylene acetylene ethers, polyoxyalkylene alkylamines, and the like; but polyoxyalkylene alkylamine defoamers are particularly preferable. The blending mass ratio of the oxyalkylene-based defoamer is preferably in the range of 0.01 to 20 wt% with respect to the cement admixture according to the present invention.

(2) Combination essentially of two components: the cement admixture according to the present invention and an ingredient-separation inhibitor. Examples of the ingredient-separation inhibitors for use include various thickeners such as nonionic cellulose ethers, and compounds having a polyoxyalkylene chain that have a hydrophobic substituent group of hydrocarbon chain having 4 to 30 carbon atoms and additionally an alkyleneoxide having 2 to 18 carbon atoms as its partial structures at an average addition mole number of 2 to 300, and the like. The blending mass ratio of the cement admixture according to the present invention to the ingredient-separation inhibitor is preferably 10/90 to 99.99/0.01 and more preferably 50/50 to 99.9/0.1. The cement composition in the combination above is preferable as a high-flow concrete, self-packing concrete, or self-leveling agent.

(3) Combination essentially of two components: the cement admixture according to the present invention and an accelerator. Examples of the accelerators for use include soluble calcium salts such as calcium chloride, calcium nitrite, and calcium nitrate; chloride salts such as iron chloride and magnesium chloride; thiosulfate salts; formic acid and formate salts such as calcium formate; and the like. The blending mass ratio of the cement admixture according to the present invention to the accelerator is preferably 10/90 to 99.9/0.1 and more preferably 20/80 to 99/1.

(4) Combination essentially of three components: the cement admixture according to the present invention, an oxyalkylene-based defoamer, and an AE agent. Examples of the oxyalkylene-based defoamers for use include polyoxyalkylenes, polyoxyalkylene alkylethers, polyoxyalkylene acetylene ethers, polyoxyalkylene alkylamines, and the like; and polyoxyalkylene alkylamines are particularly preferable. The blending mass ratio of the cement admixture according to the present invention to the defoamer is preferably 0.01 to 20 wt% with respect to the cement admixture according to the present invention. On the other hand, the blending weight ratio of the AE agent is preferably 0.001 to 2 wt% with respect to the cement.

The cement admixture according to the present invention may be used in the state of aqueous solution or alternatively, in the state of powder, for example, prepared by neutralizing the polymer with a divalent metal hydroxide, such as calcium or magnesium hydroxide after polymerization to obtain a polyvalent salt of the polymer, and drying the polymer; drying after the polymer is adsorbed on an inorganic powder such as silica fine powder; or forming and drying a thin film thereof on a substrate by using a drum, disk or belt dryer and pulverizing the film. In addition, the powdered cement admixture according to the present invention may be used as a premixed product for use in plastering, flooring, grouting, or the like, after it is blended with a water-free cement composition such as cement powder or dry mortar, previously before or during blending of the cement composition.

(Cement composition)

The cement composition according to the present invention is characterized in containing the above cement admixture, a cement, and water. In another preferable embodiment, it is a hydraulic composition such as cement paste, mortar, concrete, or plaster, to which fine aggregates (sand, etc.) and/or coarse aggregates (gravel, etc.) are added where necessary.

Among the hydraulic compositions, cement compositions using a cement as the hydraulic ingredient are most common, and such a cement composition contains the cement admixture according to the present invention, a cement, and water as its essential components. The cement composition is also a preferable embodiment of the present invention.

Examples of the cements include Portland cements (such as normal, fast-curing high-strength, ultrafast-curing high-strength, medium-heat generating, sulfate salt-resistant, and low-alkali-containing types), various mixed cements (such as blast furnace cement, silica cement, and flyash cement), white Portland cements, alumina cements, ultrafast-curing cements (such as one-clinker fast-curing cement, two-clinker fast-curing cement, and magnesium phosphate cement), grouting cements, oil-well cements, low-heat-generating cements (such as low-heat-generating blast furnace cement, flyash-mixed low-heat-generating blast furnace cements, high-belite-containing cement), ultrahigh strength cements, cement-based solidifiers, eco-cements (such as cements prepared by using one or more of municipal waste and sewage sludge-incineration ashes as raw materials), and the like, as well as those mixed with a fine powder of blast furnace slag, flyash, cinder ash, clinker ash, husk ash, silica fume, silica powder, limestone powder, or the like and those added with pluster. Examples of the aggregates include gravel, crushed stone, granulated slag, regenerated aggregate, and the like, as well as refractory aggregates such as of silica, clay, zircon, high alumina, silicon carbide, graphite, chromium, chromium magnesium oxide, and magnesia, and the like.

In regard to the amounts of water and cement per 1 $m^3$ of the cement composition and the water/cement ratio (by mass), the unit water quantity is preferably 100 to 185 $kg/m^3$, the cement quantity used, 200 to 800 $kg/m^3$; and the water/cement ratio (by mass), 0.1 to 0.7 (preferably, the unit water quantity, 120 to 175 $kg/m^3$; the cement quantity used, 250 to 800 $kg/m^3$; the water/cement ratio (by mass), 0.2 to 0.65), and the cement composition according to the present invention is usable in a wide range of blending ratio from low to high. The cement admixture according to the present invention is usable in high-water-reduction-rate range, i.e., at a smaller water/cement ratio (by mass) of as low as 0.15 to 0.5 (preferably 0.15 to 0.4), and, in addition, is effective both in high-strength concretes having a high unit cement quantity and a smaller water/cement ratio and in lean-mix concretes having a low unit cement quantity of 300 $kg/m^3$ or less.

For example, in a mortar or concrete using the hydraulic cement, the blending rate of the cement admixture in the cement composition is preferably 0.01 to 10.0 wt% (preferably 0.02 to 5.0 wt%, more preferably 0.05 to 3.0 wt%, and particularly preferably 0.1 to 2.0 wt%) with respect to the weight of the cement based on solids, for reduction of the unit water quantity and improvement in strength and durability. At a rate lower than the blending rate above, the resulting cement may not have sufficiently preferable properties, while at a rate of more than the blending rate, the cement shows saturation of the advantageous effects and may become disadvantageous from the point of production cost.

As described above, the cement composition according to the present invention, which is higher in dispersibility and capable of retaining it even in high-water-reduction-rate range, shows sufficient initial dispersibility, and has lower viscosity and superior workability even at low temperature, is applicable to ready-mixed concretes, concretes for secondary concrete products (precast concretes), concretes for centrifugal casting, concretes for vibration tamping, vapor-curing concretes, blasting concretes, and the like; and also to mortars and concretes demanding high fluidity such as medium-fluidity concrete (concrete having a slump value in the range of 22 to 25 cm), high-flow concrete (concretes having a slump value in the range of 25 cm or more and a slump flow value of 50 to 70 cm), self-packing concrete, and self-leveling agent.

[Examples]

(GPC measurement)

Column used: TSK guard column α and TSK gel α-5000, α-4000, and α-3000 connected in that order, manufactured by Tosoh Corporation

Eluant: solution containing 27.9 g of boric acid and 33.8 g of potassium chloride dissolved in 1,000.0 g of acetonitrile and 8,938.4 g of water and adjusted to pH 9.0 with 30% NaOH.

Sample injection quantity: 100 μL

Flow rate: 0.6 ml/minute

Column temperature: 40°C

Detector: 2414 differential refractometer, manufactured by Japan Waters

Analytical software: Empower Software manufactured by Japan Waters

Standard substances for preparation of calibration curve: polyethylene glycol samples [peak top molecular weight (Mp): 685,000, 272,500, 219,300, 107,000, 50,000, 26,840, 11,840, 7,100, 4,250, and 1,470]

Calibration curve: a cubic equation was prepared, based on the Mp values and the elution times of the polyethylene glycols.

The sample used was a solution (aqueous solution) of the polymer at a polymer concentration adjusted to 0.5 wt%.

The $(P_o \times 100)/(P_0+Q_0)$ value was determined by using the molecular-weight distribution curve obtained according to the following method:

After GPC measurement of the samples under the measuring condition described above, the elution times were plotted on the horizontal axis and the electrical resistances of the eluates detected by the detector above on the vertical axis, giving a graph. Then, GPC measurement was repeated by using a sample containing no polymer prepared similarly according to a method similar to that above, and the polymer peak was identified by comparing the results with those obtained by using a sample containing the polymer. A base line is then drawn on the molecular-weight distribution curve in the graph manually, and the elution-starting time (Lh), elution-ending time (Ln), and peak-top time (Mp) were identified manually. In the Examples and Comparative Examples, there were a polymer peak and a noise peak overlapping in the vicinity of the elution-ending time, and the time at the bottom point of the valley between the polymer peak and the noise peak was regarded as the elution-ending time. Then, Lm was calculated according to the following Formula (1):

$$Lm = (Ln+Mp)/2 \quad (1)$$

The peak area between the elution times Lm and Ln ($P_0$) and the peak area between the elution times Lh and Mp ($Q_0$) were then calculated mechanical by using the analytical software. The "$(P_0 \times 100)/(P_0+Q_0)$ value" was determined from the value obtained.

(Method of preparing polymers)

-Polymer according to the present invention (1)

506. 3 g of water was charged in a glass reaction container equipped with a thermometer, a stirrer, slow-adding funnels, a nitrogen-supplying tube, and a reflux condenser; and the inside atmosphere of the reaction container was displaced with nitrogen while water was agitated, and the water was heated to 80°C under nitrogen atmosphere. Separately, 422.2 g of methoxypolyethylene glycol methacrylic ester (average ethyleneoxide-addition mole number: 25), 84.0 g of methacrylic acid, 126.6 g of water, and 2.9 g of mercaptopropionic acid (chain-transfer agent) were mixed to obtain an aqueous monomer-mixture solution (I). 140.7 g of methoxypolyethylene glycol methacrylic acid ester (average ethyleneoxide-addition mole number: 25), 28.0 g of methacrylic acid, 42.2 g of water, and 7.2 g of mercaptopropionic acid (chain-transfer agent) were mixed to give an aqueous monomer-mixture solution (II).
Separately, 7.8 g of ammonium persulfate was dissolved in 142.2 g of water, to give an initiator aqueous solution.

Then, the aqueous monomer-mixture solution (I) was slow-added into the reaction container at a constant speed for three hours, while the initiator aqueous solution was also slow added for five hours. After addition of the aqueous monomer-mixture solution (I), the aqueous monomer-mixture solution (II) was slow added at a constant speed for two 2 hours. After the slow addition, the mixture was kept at 80°C additionally for one hour, allowing the polymerization reaction to complete. After cooled to 30°C, the solution was neutralized to pH 7.0 with aqueous 30% sodium hydroxide solution, to give an aqueous solution containing the polymer according to the present invention (1).

-Polymer according to the present invention (2)

A solution containing a polymer according to the present invention (2) was prepared by the same method as the "polymer according to the present invention (1) ", except that the amount of mercaptopropionic acid (chain-transfer agent) added to the aqueous monomer-mixture solution (II) was changed from 7.2 g to 9.6 g.

-Polymer according to the present invention (3)

A solution containing a polymer according to the present invention (3) was prepared by the same method as the "polymer according to the present invention (1)", except that the composition of the aqueous monomer-mixture solution (I) was changed to 450.2 g of methoxypolyethylene glycol methacrylic ester (average ethyleneoxide-addition mole number: 25), 56.0 g of methacrylic acid, 126.6 g of water, and 2.2 g of mercaptopropionic acid (chain-transfer agent); and the composition of the aqueous monomer-mixture solution (II) was changed to 150.1 g of methoxypolyethylene glycol methacrylic ester (average ethyleneoxide-addition mole number 25), 18.7 g of methacrylic acid, 42.2 g of water, and 7.4 g of mercaptopropionic acid (chain-transfer agent).

-Comparative polymer (1)

135. 0 g of water was charged in a glass reaction container equipped with a thermometer, a stirrer, slow-adding funnels, a nitrogen-supplying tube, and a reflux condenser; the inside atmosphere of the reaction container was displaced with nitrogen while water was agitated; and the water was heated to 80°C under nitrogen atmosphere. Separately, 75.1 g of methoxypolyethylene glycol methacrylic ester (average ethyleneoxide-addition mole number: 25), 14. 9 g of methacrylic acid, 22.5 g of water, and 0.4 g of mercaptopropionic acid (chain-transfer agent) were mixed, to give an aqueous monomer-mixture solution (I). 75.1 g of methoxypolyethylene glycol methacrylic ester (average ethyleneoxide-addition mole number: 25), 14.9 g of methacrylic acid, 22.5 g of water, and 1.3 g of mercaptopropionic acid (chain-transfer agent) were mixed, to give an aqueous monomer-mixture solution (II).
Separately, 2.1 g of ammonium persulfate was dissolved in 37. 9 g of water, to give an initiator aqueous solution.
Then, the aqueous monomer-mixture solution (I) was slow added into the reaction container at a constant speed for three hours, while the initiator aqueous solution was also slow added for five hours. After the addition of the aqueous monomer-mixture solution (I), the aqueous monomer-mixture solution (II) was slow added at a constant speed for two hours. After the slow addition, the mixture was kept at 80°C additionally for one hour, allowing the polymerization reaction to complete. After cooled to 30°C, the solution was neutralized to pH 7.0 with aqueous 30% sodium hydroxide solution, to give an aqueous solution containing a comparative polymer (1).

-Comparative polymer (2)

595.0 g of water was charged in a glass reaction container equipped with a thermometer, a stirrer, slow-adding funnels, a nitrogen-supplying tube, and a reflux condenser; the inside atmosphere of the reaction container was displaced with nitrogen while water was agitated; and the water was heated to 80°C under nitrogen atmosphere. Separately, 500.4 g of methoxypolyethylene glycol methacrylic ester (average ethyleneoxide-addition mole number: 25), 99.6 g of methacrylic acid, 150.0 g of water, and 5.0 g of a chain-transfer agent mercaptopropionic acid were mixed, to give an aqueous monomer-mixture solution (I). Separately, 4.5 g of ammonium persulfate was dissolved in 145.5 g of water, to give an initiator aqueous solution.
Then, the aqueous monomer-mixture solution (I) slow added into the reaction container at a constant speed for four hours, while the initiator aqueous solution was also slow added for five hours. After the slow addition, the mixture was kept at 80°C additionally for one hour, allowing the polymerization reaction to complete. After cooled to 30°C, the solution was neutralized to pH 7.0 with aqueous 30% sodium hydroxide solution, to give an aqueous solution containing a comparative polymer (2).

(Mortar test)

220 g of a solution consisting of an aqueous polymer solution containing one of the polymers according to the present invention (1) to (3) and comparative polymers (1) and (2), a defoamer ("MA404" manufactured by NMB), and water in the addition amounts shown in the following Table 1 was added to 550 g of Taiheiyo Normal Portland cement, and the mixture was agitated in a Hobart mortar mixer (model number N-50; manufactured by Hobart) at its first agitation frequency for 30 seconds. Then, 1350 g of the "standard sand for cement strength test (JIS R5201, specified in its Appendix 205.1.3 in 1997) " was added over 30 seconds into the mixer, and the mixture was agitated at its second frequency for 30 seconds; and, after the mortar in the mortar mixer is scraped off taking over 15 seconds while the agitation is terminated, and left still for 75 seconds. After 75 seconds of stand still, the mixture was agitated additionally at the second frequency for 60 seconds, to give a mortar. The mortar prepared six minutes after initiation of water injection was poured into half of a flow cone (described in JIS R5201 in 1997) and was tamped 15 times by using a tamping rod. The mortar was then poured into the flow cone to the fullest extent, and was tamped 15 times by using the tamping rod. Then, the diameters of the region where the mortar was widened immediately after the flow cone was pulled out vertically were determined at two points, and the average thereof was designated as its flow value (mortar flow after 6 minutes).
Then, the widened mortar was then transferred and left still in a container, and the mortar flow values 15 minutes after water injection (mortar flow after 15 minutes) and 30 minute after water injection (mortar flow after 30 minutes) were determined.
Table 1 shows the results of the mortar flow obtained by using each of the polymers according to the present invention (1) to (3) and comparative polymers (1) and (2). Figures 3 to 7 show the results of GPC measurement of the polymers according to the present invention (1) to (3) and the comparative polymers (1) and (2).

Table 1

| | Weight-average molecular weight (Mw) | Peak-to P moleculer weight (Mp) | Area (P) | Area (Q) | $(P_o \times 100)/(P_o + Q_o)$ Value | Ratio of chain-transfer agent* | Amount of polymer added (wt%/ cement)*2 | Amount of MA404 added (wt%/ polymer) *3 | Mortar flow (mm) | | | Figure showing the results of GPC measurement |
|---|---|---|---|---|---|---|---|---|---|---|---|---|
| | | | | | | | | | After 6 minutes | After 15 minutes | After 30 minutes | - |
| Polymer(1) of the invention | 55800 | 47000 | 321732 | 968826 | 24.4 | 7.24 | 0.15 | 10 | 185 | 176 | 170 | Figure 3 |
| Polymer(2) of the invention | 49000 | 45000 | 469790 | 928669 | 33.6 | 9.54 | 0.15 | 10 | 188 | 180 | 175 | Figure 4 |
| Polymer(3) of the invention | 62700 | 57500 | 455248 | 771234 | 37.1 | 9.78 | 0.15 | 10 | 190 | 185 | 180 | Figure 5 |
| Comparative polymer (1) | 50100 | 18500 | 156111 | 1872708 | 7.7 | 3.22 | 0.15 | 10 | 160 | - | - | - |
| Comparative polymer (1) | 50100 | 18500 | 156111 | 1872708 | 7.7 | 3.22 | 0.18 | 10 | 182 | 175 | 172 | Figure 6 |
| Comparative polymer (2) | 56900 | 46200 | 86630 | 691350 | 11.1 | - | 0.15 | 10 | 185 | 162 | 155 | Figure 7 |

*1: Ratio of chain-transfer agent to monomer components in aqueous monomer-mixture solution (II) and the ratio of chain-transfer agent to monomer components in aqueous monomer-mixture solution (1)
*2: Weight of polymer solid with respect to 100% of cement
*3: Weight of MA404 solid with respect to 100% of polymer.

The results showed that the polymers according to the present invention (1) to (3) had a mortar flow value (dispersibility) of 185 to 190 mm after six minutes, but the comparative polymer (1) had lower dispersibility (160mm) than the polymers of the present invention, because the comparative polymer (1) had its peak top located at a position relatively lower in molecular weight as shown in Figure 6. It is necessary to increase the amount of the polymer added for obtaining a dispersibility similar to that of the polymers according to the present invention (0.18 wt% of comparative polymer (1) in cement, versus 0.15 wt% of the polymer according to the present invention in cement).

Although the comparative polymer (2), which has a Mp value almost similar to that of the polymers according to the present invention, showed dispersibility similar to that of the polymer according to the present invention, but as shown in Figure 7, it was inferior in dispersibility-retention (changes in mortar flow value after 6 minutes, after 15 minutes, and after 30 minutes), because the molecular weight distribution thereof is relatively homogeneous and thus, the rate of the polymer in the low-molecular weight side is smaller than that of the polymers according to the present invention.

The results above indicate that each of the polymers according to the present invention, which contains a polymer in high-molecular weight region needed for dispersibility and a polymer in low-molecular weight region needed for change over time at a favorable ratio, is a polycarboxylic acid polymer for blending in cement superior both in dispersibility and fluidity.

The polycarboxylic acid polymer for blending in cement according to the present invention, which contains a high-molecular weight polymer and a low-molecular weight polymer at a ratio in the limited range of a particular parameter, improves both of the dispersion and dispersibility-retention of a cement composition containing a cement admixture containing the polymer. In addition, it is possible to prepare the polymer having the properties described above easily by using the production method according to the present invention.

## Claims

**1.** A polycarboxylic acid polymer for a cement admixture, **characterized in that**

(1) a molecular weight distribution of the polycarboxylic acid polymer is determined by gel permeation chromatography to provide a molecular-weight distribution curve having an elution time on the horizontal axis,
(2) a base line is drawn on the molecular-weight distribution curve,
(3) an elution-starting time, an elution-ending time, and
a peak-top time of a peak corresponding to the polymer component are determined respectively as Lh, Ln, and Mp,
(4) Lm is calculated according to the following Formula (1) :

$$Lm = (Ln+Mp)/2 \qquad (1),$$

and
(5) $P_0$ and $Q_0$ satisfy the following Formula (2):

$$15 \leq (P_0 \times 100)/(P_0+Q_0) \leq 45 \qquad (2)$$

wherein $P_0$ is defined as a peak area between the elution times Lm and Ln and $Q_0$ is defined as the peak area between the elution times Lh and Mp,
wherein
the polymer contains a constituent unit (I) in an amount of 2 wt% to 90 wt%, represented by the following Chemical Formula (3)

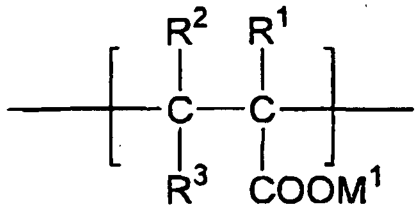

(3)

[wherein, $R^1$, $R^2$ and $R^3$ each independently represent a hydrogen atom, a methyl group, or $-(CH_2)_2COOM^2$ [$-(CH_2)_2COOM^2$ may form an anhydride with $-COOM^1$ or another $-(CH_2)_2COOM^2$]; Z represents an integer of 0 to 2; and $M^1$ and $M^2$ each independently represent a hydrogen atom, an alkali metal atom, an alkali-earth metal atom, an ammonium group or an organic amine group], and
wherein
the polymer contains a constituent unit (II) in an amount of 2 wt% to 98 wt%, represented by the following Chemical Formula (4):

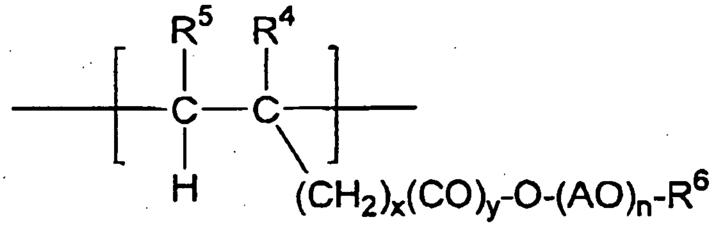

(4)

[wherein, $R^4$ and $R^5$ each independently represent a hydrogen atom or a methyl group; each AO independently represents an oxyalkylene group having 2 or more carbon atoms or a mixture of two or more thereof; x represents an integer of 0 to 2; y is 0 or 1; n represents an average oxyalkylene-group-addition mole number of 1 to 300; and $R^6$ represents a hydrogen atom or a hydrocarbon group having 1 to 20 carbon atoms].

2. The polycarboxylic acid polymer for the cement admixture according to Claim 12, essentially comprising an oxyalkylene chain containing a constituent unit of an oxyalkylene group having 3 or more carbon atoms as an oxyalkylene chain in the constituent unit (II).

3. The polycarboxylic acid polymer for the cement admixture according to Claim 2, wherein oxyalkylene chains each containing a constituent unit of an oxyalkylene group having 2 carbon atoms are bound to both terminals of the oxyalkylene chain having a constituent unit of an oxyalkylene group having 3 or more carbon atoms.

4. A cement admixture comprising a polycarboxylic acid polymer, **characterized in that**

(1) a molecular weight distribution of the polycarboxylic acid polymer is determined by gel permeation chromatography to provide a molecular-weight distribution curve having an elution time on the horizontal axis,
(2) a base line is drawn on the molecular-weight distribution curve,
(3) an elution-starting time, an elution-ending time, and a peak-top time of a peak corresponding to the polymer component are determined respectively as Lh, Ln, and Mp,
(4) Lm is calculated according to the following Formula (1) :

$$Lm = (Ln+Mp)/2 \qquad (1),$$

and
(5) $P_0$ and $Q_0$ satisfy the following Formula (2) :

$$15 \leq (P_0 \times 100)/(P_0+Q_0) \leq 45 \quad (2)$$

wherein $P_0$ is defined as a peak area between the elution times Lm and Ln and $Q_0$ is defined as the peak area between the elution times Lh and Mp,
wherein
the polymer contains a constituent unit (I) in an amount of 2 wt% to 90 wt %, represented by the following Chemical Formula (3)

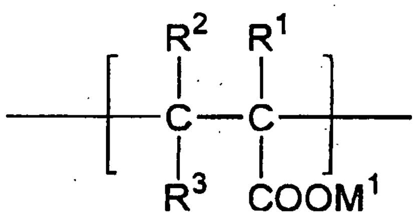

(3)

[wherein, $R^1$, $R^2$ and $R^3$ each independently represent a hydrogen atom, a methyl group, or $-(CH_2)_2COOM^2$ [$-(CH_2)_2COOM^2$ may form an anhydride with $-COOM^1$ or another - $(CH_2)_zCOOM^2$] ; Z represents an integer of 0 to 2; and $M^1$ and $M^2$ each independently represent a hydrogen atom, an alkali metal atom, an alkali-earth metal atom, an ammonium group or an organic amine group], and
wherein
the polymer contains a constituent unit (II) in an amount of 2 wt% to 98 wt%, represented by the following Chemical Formula (4):

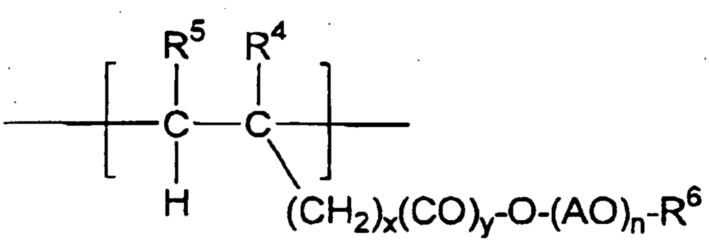

(4)

[wherein, $R^4$ and $R^5$ each independently represent a hydrogen atom or a methyl group; each AO independently represents an oxyalkylene group having 2 or more carbon atoms or a mixture of two or more thereof; x represents an integer of 0 to 2; y is 0 or 1; n represents an average oxyalkylene-group-addition mole number of 1 to 300; and $R^6$ represents a hydrogen atom or a hydrocarbon group having 1 to 20 carbon atoms].

**5.** The cement admixture according to Claim 4, further comprising a second polycarboxylic acid polymer that is different from the polycarboxylic acid polymer.

**6.** The cement admixture according to Claim 4, further comprising an adduct of a polyalkyleneimine with an alkyleneoxide.

**7.** The cement admixture according to Claim 4, further comprising a second polycarboxylic acid polymer that is different from the polycarboxylic acid polymer and an adduct of a polyalkyleneimine with an alkyleneoxide, in a ratio of the polycarboxylic acid polymer/the second polycarboxylic acid polymer/ the adduct of the polyalkyleneimine with the alkyleneoxide being 10 to 80/10 to 89/1 to 80 (by mass).

**8.** The cement admixture according to Claim 4, further comprising a second polycarboxylic acid polymer that is different from the polycarboxylic acid polymer and an adduct of a polyalkyleneimine with an alkyleneoxide, in a ratio of the polycarboxylic acid polymer/the second polycarboxylic acid polymer/ the adduct of the polyalkyleneimine with the alkyleneoxide being 10 to 80/10 to 89/1 to 80 (by mass).

**9.** A cement composition comprising
a cement admixture containing a polycarboxylic acid polymer,
at least a cement, and
water, wherein

(1) a molecular weight distribution of the polycarboxylic acid polymer is determined by gel permeation chromatography to provide a molecular-weight distribution curve having an elution time on the horizontal axis,
(2) a base line is drawn on the molecular-weight distribution curve,
(3) an elution-starting time, an elution-ending time, and a peak-top time of a peak corresponding to the polymer component are determined respectively as Lh, Ln, and Mp,
(4) Lm is calculated according to the following Formula (1):

$$Lm = (Ln+Mp)/2 \qquad (1),$$

and
(5) $P_0$ and $Q_0$ satisfy the following Formula (2):

$$15 \leq (P_0 \times 100)/(P_0+Q_0) \leq 45 \qquad (2)$$

wherein $P_0$ is defined as a peak area between the elution times Lm and Ln and $Q_0$ is defined as the peak area between the elution times Lh and Mp,
wherein the polymer contains a constituent unit (I) in an amount of 2 wt% to 90 wt %, represented by the following Chemical Formula (3)

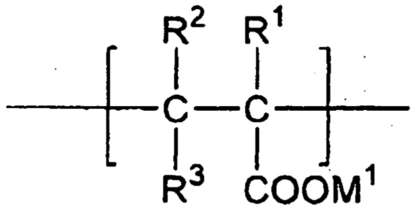

(3)

[wherein, $R^1$, $R^2$ and $R^3$ each independently represent a hydrogen atom, a methyl group, or $-(CH_2)_zCOOM^2$ [$-(CH_2)_2COOM^2$ may form an anhydride with $-COOM^1$ or another $-(CH_2)_zCOOM^2$]; Z represents an integer of 0 to 2; and $M^1$ and $M^2$ each independently represent a hydrogen atom, an alkali metal atom, an alkali-earth metal atom, an ammonium group or an organic amine group], and
wherein the polymer contains a constituent unit (II) in an amount of 2 wt% to 98 wt%, represented by the following Chemical Formula (4):

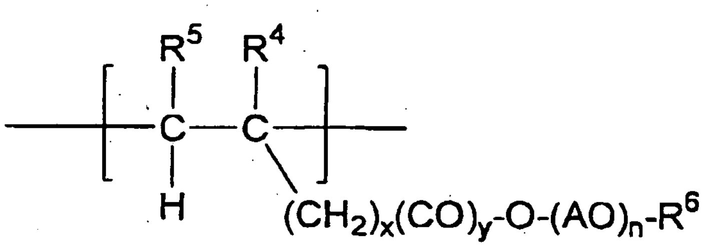

(4)

[wherein, $R^4$ and $R^5$ each independently represent a hydrogen atom or a methyl group; each AO independently represents an oxyalkylene group having 2 or more carbon atoms or a mixture of two or more thereof; x represents

an integer of 0 to 2; y is 0 or 1; n represents an average oxyalkylene-group-addition mole number of 1 to 300; and $R^6$ represents a hydrogen atom or a hydrocarbon group having 1 to 20 carbon atoms].

**10.** A method of producing a polycarboxylic acid polymer for a cement admixture, comprising polymerizing a unsaturated monomer component containing a monomer represented by the following Chemical Formula (5):

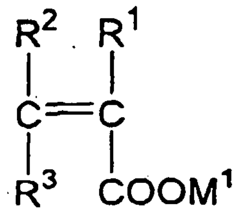

(5)

[wherein, $R^1$, $R^2$ and $R^3$ each independently represent a hydrogen atom, a methyl group, or $-(CH_2)_ZCOOM^2$ [$-(CH_2)_ZCOOM^2$ may form an anhydride with $-COOM^1$ or another $-(CH_2)_zCOOM^2$]; Z represents an integer of 0 to 2; and $M^1$ and $M^2$ each independently represent a hydrogen atom, an alkali metal atom, an alkali-earth metal atom, an ammonium group or an organic amine group]
in at least two steps where the amounts of a chain-transfer agent with respect to the unsaturated monomer components are different from each other,
wherein the amounts of the chain-transfer agent used with respect to the unsaturated monomer components are different from each other by 5 times or more between polymerization steps constituting the two steps, and wherein
the unsaturated monomer component contains a monomer represented by the following Chemical Formula (6):

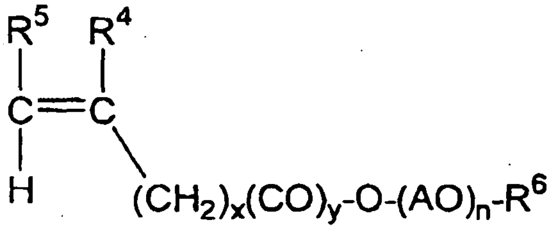

(6)

[wherein, $R^4$ and $R^5$ each independently represent a hydrogen atom or a methyl group;
each AO independently represents an oxyalkylene group having 2 or more carbon atoms or a mixture of two or more thereof (when two or more oxyalkylene groups are used, the oxyalkylene groups may be added in a block form or random form) ; x represents a number of 0 to 2; y is 0 or 1; n represents an average oxyalkylene-group-addition mole number of 1 to 300; and $R^5$ represents a hydrogen atom or a hydrocarbon group having 1 to 20 carbon atoms].

**Patentansprüche**

**1.** Polycarbonsäurepolymer für ein Zementgemisch,
**dadurch gekennzeichnet, dass**

(1) eine Molekulargewichtsverteilung des Polycarbonsäurepolymers durch Gelpermeationschromatographie bestimmt wird, um eine Molekulargewichtsverteilungskurve mit einer Elutionszeit auf der horizontalen Achse bereitzustellen,
(2) eine Basislinie auf der Molekulargewichtsverteilungskurve gezogen wird,
(3) eine Elutionsstartzeit, eine Elutionsstoppzeit bzw. eine Spitzenpeakzeit eines Peaks, welcher der Polymerkomponente entspricht, als Lh, Ln bzw. Mp bestimmt werden,
(4) Lm gemäß der folgenden Formel (1) berechnet wird:

$$Lm = (Ln+Mp)/2 \qquad (1),$$

und

(5) $P_0$ und $Q_0$ der folgenden Formel (2) genügen:

$$15 \leq (P_0x100)/(P_0+Q_0) \leq 45 \qquad (2)$$

wobei $P_0$ als ein Peakbereich zwischen den Elutionszeiten Lm und Ln definiert ist und $Q_0$ als der Peakbereich zwischen den Elutionszeiten Lh und Mp definiert ist,

wobei das Polymer eine Grundeinheit (I) in einer Menge von 2 Gew.-% bis 90 Gew.-% enthält, dargestellt durch die folgende chemische Formel (3)

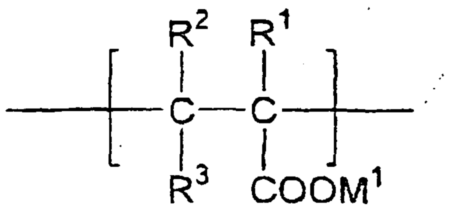

(3)

[wobei $R^1$, $R^2$ und $R^3$ jeweils unabhängig ein Wasserstoffatom, eine Methylgruppe oder $-(CH_2)_zCOOM^2$ [$-(CH_2)_zCOOM^2$ kann ein Anhydrid mit $-COOM^1$ oder einem anderen $-(CH_2)_zCOOM^2$ bilden] darstellen; Z eine ganze Zahl von 0 bis 2 darstellt; und $M^1$ und $M^2$ jeweils unabhängig ein Wasserstoffatom, ein Alkalimetallatom, ein Erdalkalimetallatom, eine Ammoniumgruppe oder eine organische Amingruppe darstellen], und wobei das Polymer eine Grundeinheit (II) in einer Menge von 2 Gew.-% bis 98 Gew.-% enthält, dargestellt durch die folgende chemische Formel (4):

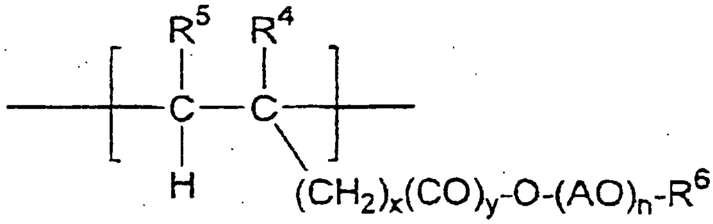

(4)

[wobei $R^4$ und $R^5$ jeweils unabhängig ein Wasserstoffatom oder eine Methylgruppe darstellen; jedes AO unabhängig eine Oxyalkylengruppe mit 2 oder mehr Kohlenstoffatomen oder ein Gemisch von zwei oder mehr davon darstellt; x eine ganze Zahl von 0 bis 2 darstellt; y 0 oder 1 ist; n eine durchschnittliche Oxyalkylengruppe-Additionsmolzahl von 1 bis 300 darstellt; und $R^6$ ein Wasserstoffatom oder eine Kohlenwasserstoffgruppe mit 1 bis 20 Kohlenstoffatomen darstellt].

**2.** Polycarbonsäurepolymer für das Zementgemisch nach Anspruch 1, im Wesentlichen umfassend eine Oxyalkylenkette, enthaltend eine Grundeinheit einer Oxyalkylengruppe mit 3 oder mehr Kohlenstoffatomen, als eine Oxyalkylenkette in der Grundeinheit (II).

**3.** Polycarbonsäurepolymer für das Zementgemisch nach Anspruch 2, wobei Oxyalkylenketten, die jeweils eine Grundeinheit einer Oxyalkylengruppe mit 2 Kohlenstoffatomen enthalten, an beide Enden der Oxyalkylenkette mit einer Grundeinheit einer Oxyalkylenkette mit 3 oder mehr Kohlenstoffatomen gebunden sind.

**4.** Zementgemisch, umfassend ein Polycarbonsäurepolymer, **dadurch gekennzeichnet, dass**

(1) eine Molekulargewichtsverteilung des Polycarbonsäurepolymers durch Gelpermeationschromatographie bestimmt wird, um eine Molekulargewichtsverteilungskurve mit einer Elutionszeit auf der horizontalen Achse bereitzustellen,
(2) eine Basislinie auf der Molekulargewichtsverteilungskurve gezogen wird,
(3) eine Elutionsstartzeit, eine Elutionsstoppzeit bzw. eine Spitzenpeakzeit eines Peaks, welcher der Polymerkomponente entspricht, als Lh, Ln bzw. Mp bestimmt werden,
(4) Lm gemäß der folgenden Formel (1) berechnet wird:

$$Lm = (Ln+Mp)/2 \qquad (1),$$

und
(5) $P_0$ und $Q_0$ der folgenden Formel (2) genügen:

$$15 \leq (P_0 x100)/(P_0+Q_0) \leq 45 \qquad (2)$$

wobei $P_0$ als ein Peakbereich zwischen den Elutionszeiten Lm und Ln definiert ist und $Q_0$ als der Peakbereich zwischen den Elutionszeiten Lh und Mp definiert ist,

wobei das Polymer eine Grundeinheit (I) in einer Menge von 2 Gew.-% bis 90 Gew.-% enthält, dargestellt durch die folgende chemische Formel (3)

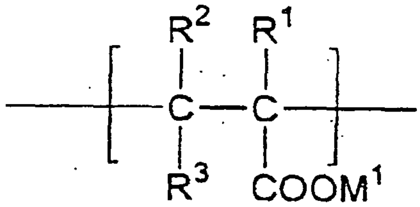 (3)

[wobei $R^1$, $R^2$ und $R^3$ jeweils unabhängig ein Wasserstoffatom, eine Methylgruppe oder $-(CH_2)_ZCOOM^2$ [$-(CH_2)_ZCOOM^2$ kann ein Anhydrid mit $-COOM^1$ oder einem anderen $-(CH_2)_zCOOM^2$ bilden] darstellen; Z eine ganze Zahl von 0 bis 2 darstellt; und $M^1$ und $M^2$ jeweils unabhängig ein Wasserstoffatom, ein Alkalimetallatom, ein Erdalkalimetallatom, eine Ammoniumgruppe oder eine organische Amingruppe darstellen], und
wobei das Polymer eine Grundeinheit (II) in einer Menge von 2 Gew.-% bis 98 Gew.-% enthält, dargestellt durch die folgende chemische Formel (4):

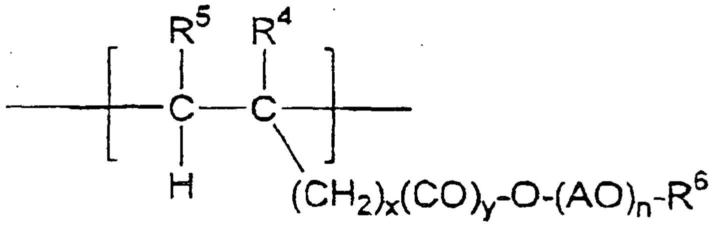 (4)

[wobei $R^4$ und $R^5$ jeweils unabhängig ein Wasserstoffatom oder eine Methylgruppe darstellen; jedes AO unabhängig eine Oxyalkylengruppe mit 2 oder mehr Kohlenstoffatomen oder ein Gemisch von zwei oder mehr davon darstellt; x eine ganze Zahl von 0 bis 2 darstellt; y 0 oder 1 ist; n eine durchschnittliche Oxyalkylengruppe-Additionsmolzahl von 1 bis 300 darstellt; und $R^6$ ein Wasserstoffatom oder eine Kohlenwasserstoffgruppe mit 1 bis 20 Kohlenstoffatomen darstellt].

**5.** Zementgemisch nach Anspruch 4, weiter umfassend ein zweites Polycarbonsäurepolymer, das von dem Polycarbonsäurepolymer verschieden ist.

**6.** Zementgemisch nach Anspruch 4, weiter umfassend ein Addukt eines Polyalkylenimins mit einem Alkylenoxid.

**7.** Zementgemisch nach Anspruch 4, weiter umfassend ein zweites Polycarbonsäurepolymer, das von dem Polycarbonsäurepolymer und einem Addukt eines Polyalkylenimins mit einem Alkylenoxid verschieden ist, in einem Verhältnis Polycarbonsäurepolymer/zweites Polycarbonsäurepolymer/Addukt des Polyalkylenimins mit dem Alkylenoxid von 10 zu 80/10 bis 89/1 zu 80 (in Masse).

**8.** Zementgemisch nach Anspruch 4, weiter umfassend ein zweites Polycarbonsäurepolymer, das von dem Polycarbonsäurepolymer und einem Addukt eines Polyalkylenimins mit einem Alkylenoxid verschieden ist, in einem Verhältnis Polycarbonsäurepolymer/zweites Polycarbonsäurepolymer/Addukt des Polyalkylenimins mit dem Alkylenoxid von 10 zu 80/10 bis 89/1 zu 80 (in Masse).

**9.** Zementzusammensetzung, umfassend
ein Zementgemisch, enthaltend ein Polycarbonsäurepolymer,
mindestens einen Zement und
Wasser, wobei

(1) eine Molekulargewichtsverteilung des Polycarbonsäurepolymers durch Gelpermeationschromatographie bestimmt wird, um eine Molekulargewichtsverteilungskurve mit einer Elutionszeit auf der horizontalen Achse bereitzustellen,
(2) eine Basislinie auf der Molekulargewichtsverteilungskurve gezogen wird,
(3) eine Elutionsstartzeit, eine Elutionsstoppzeit bzw. eine Spitzenpeakzeit eines Peaks, welcher der Polymerkomponente entspricht, als Lh, Ln bzw. Mp bestimmt werden,
(4) Lm gemäß der folgenden Formel (1) berechnet wird:

$$Lm = (Ln+Mp)/2 \qquad (1),$$

und
(5) $P_0$ und $Q_0$ der folgenden Formel (2) genügen:

$$15 \leq (P_0 x100)/(P_0+Q_0) \leq 45 \qquad (2)$$

wobei $P_0$ als ein Peakbereich zwischen den Elutionszeiten Lm und Ln definiert ist und $Q_0$ als der Peakbereich zwischen den Elutionszeiten Lh und Mp definiert ist,
wobei das Polymer eine Grundeinheit (I) in einer Menge von 2 Gew.-% bis 90 Gew.-% enthält, dargestellt durch die folgende chemische Formel (3)

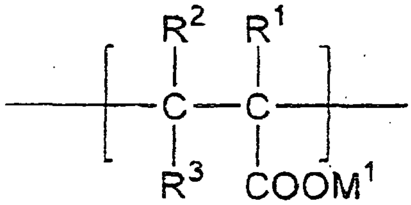

(3)

[wobei $R^1$, $R^2$ und $R^3$ jeweils unabhängig ein Wasserstoffatom, eine Methylgruppe oder $-(CH_2)_ZCOOM^2$ [$-(CH_2)_ZCOOM^2$ kann ein Anhydrid mit $-COOM^1$ oder einem anderen $-(CH_2)_ZCOOM^2$ bilden] darstellen; Z eine ganze Zahl von 0 bis 2 darstellt; und $M^1$ und $M^2$ jeweils unabhängig ein Wasserstoffatom, ein Alkalimetallatom, ein Erdalkalimetallatom, eine Ammoniumgruppe oder eine organische Amingruppe darstellen], und
wobei das Polymer eine Grundeinheit (II) in einer Menge von 2 Gew.-% bis 98 Gew.-% enthält, dargestellt durch

die folgende chemische Formel (4):

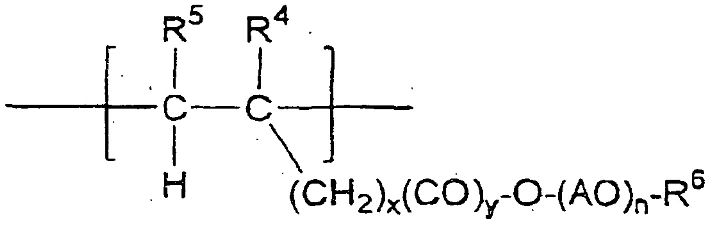

(4)

[wobei $R^4$ und $R^5$ jeweils unabhängig ein Wasserstoffatom oder eine Methylgruppe darstellen; jedes AO unabhängig eine Oxyalkylengruppe mit 2 oder mehr Kohlenstoffatomen oder ein Gemisch von zwei oder mehr davon darstellt; x eine ganze Zahl von 0 bis 2 darstellt; y 0 oder 1 ist; n eine durchschnittliche Oxyalkylengruppe-Additionsmolzahl von 1 bis 300 darstellt; und $R^6$ ein Wasserstoffatom oder eine Kohlenwasserstoffgruppe mit 1 bis 20 Kohlenstoffatomen darstellt].

**10.** Verfahren zur Herstellung eines Polycarbonsäurepolymers für ein Zementgemisch, umfassend das Polymerisieren einer ungesättigten Monomerkomponente, enthaltend ein durch die folgende chemische Formel (5) dargestelltes Monomer:

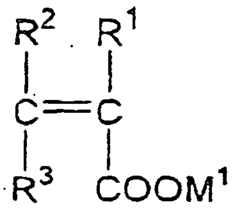

(5)

[wobei $R^1$, $R^2$ und $R^3$ jeweils unabhängig ein Wasserstoffatom, eine Methylgruppe oder $-(CH_2)_ZCOOM^2$ [$-(CH_2)_ZCOOM^2$ kann ein Anhydrid mit $-COOM^1$ oder einem anderen $-(CH_2)_zCOOM^2$ bilden] darstellen; Z eine ganze Zahl von 0 bis 2 darstellt; und $M^1$ und $M^2$ jeweils unabhängig ein Wasserstoffatom, ein Alkalimetallatom, ein Erdalkalimetallatom, eine Ammoniumgruppe oder eine organische Amingruppe darstellen],
in mindestens zwei Schritten, wobei die Mengen eines Kettenübertragungsmittels bezüglich der ungesättigten Monomerkomponenten unterschiedlich voneinander sind,
wobei sich die Mengen des bezüglich der ungesättigten Monomerkomponenten verwendeten Kettenübertragungsmittels voneinander um das Fünffache oder mehr zwischen den die zwei Schritte bildenden Polymerisationsschritten unterscheiden, und
wobei die ungesättigte Monomerkomponente ein durch die folgende chemische Formel (6) dargestelltes Monomer enthält:

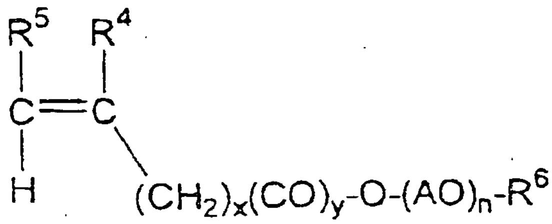

(6)

[wobei $R^4$ und $R^5$ jeweils unabhängig ein Wasserstoffatom oder eine Methylgruppe darstellen; jedes AO unabhängig eine Oxyalkylengruppe mit 2 oder mehr Kohlenstoffatomen oder ein Gemisch von zwei oder mehr davon darstellt; x eine ganze Zahl von 0 bis 2 darstellt; y 0 oder 1 ist; n eine durchschnittliche Oxyalkylengruppe-Additionsmolzahl von 1 bis 300 darstellt; und $R^6$ ein Wasserstoffatom oder eine Kohlenwasserstoffgruppe mit 1 bis 20

Kohlenstoffatomen darstellt].

**Revendications**

**1.** Polymère poly(acide carboxylique) à ajouter au ciment, **caractérisé en ce que**

(1) la distribution de poids moléculaire du polymère poly(acide carboxylique) est déterminée par chromatographie de perméation sur gel pour donner une courbe de distribution du poids moléculaire, avec le temps d'élution sur l'axe horizontal,
(2) une ligne de base est dessinée sur la courbe de distribution du poids moléculaire,
(3) le temps au départ de l'élution, le temps à la fin d'élution et le moment de maximum d'un pic correspondant au composant polymère sont déterminés respectivement comme Lh, Ln et Mp,
(4) Lm est calculé selon la formule (1) suivante :

$$Lm = (Ln + Mp)/2 \qquad (1),$$

et
(5) $P_0$ et $Q_0$ satisfont la formule (2) suivante :

$$15 \leq (P_0 \times 100)/(P_0 + Q_0) \leq 45 \qquad (2)$$

où $P_0$ est défini comme la surface du pic entre les temps d'élution Lm et Ln et $Q_0$ est défini comme la zone du pic entre les temps d'élution Lh et Mp,
le polymère contient une unité constitutive (I) en une quantité allant de 2 % en poids à 90 % en poids, représentée par la formule chimique (3) suivante :

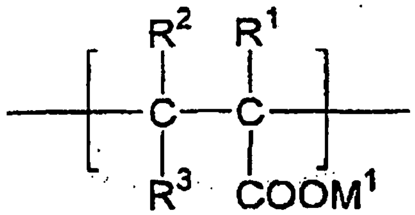

(3)

[où $R^1$, $R^2$ et $R^3$ représentent chacun indépendamment, un atome d'hydrogène, un radical méthyle ou $-(CH_2)_ZCOOM^2$ [$-(CH_2)_ZCOOM^2$ pouvant former un anhydride avec $-COOM^1$ ou un autre $-(CH_2)_ZCOOM^2$] ; Z représente un entier allant de 0 à 2 ; et $M^1$ et $M^2$ représentent chacun indépendamment, un atome d'hydrogène, un atome de métal alcalin, un atome de métal alcalino-terreux, un radical ammonium ou un radical amine organique], et
le polymère contient une unité constitutive (II) en une quantité allant de 2 % en poids à 98 % en poids, représentée par la formule chimique (4) suivante :

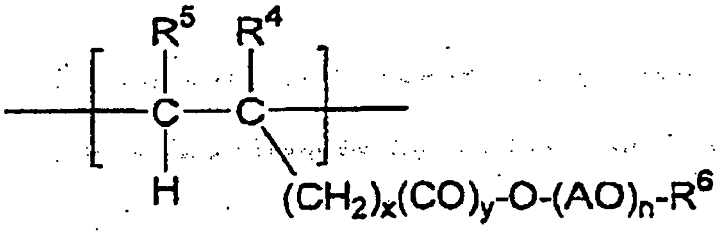

(4)

[où $R^4$ et $R^5$ représentent chacun indépendamment, un atome d'hydrogène ou un radical méthyle ; chaque AO représente indépendamment, un radical oxyalkylène ayant 2 atomes de carbone ou plus ou un mélange de deux ou plusieurs de ceux-ci ; x représente un entier allant de 0 à 2 ; y est 0 ou 1 ; n représente le nombre moyen de mole de radical oxyalkylène additionné, allant de 1 à 300 ; et $R^6$ représente un atome d'hydrogène ou un radical hydrocarboné ayant 1 à 20 atomes de carbone].

**2.** Polymère poly(acide carboxylique) à ajouter au ciment selon la revendication 1, comprenant essentiellement une chaîne oxyalkylène contenant une unité constitutive d'un radical oxyalkylène ayant 3 atomes de carbone ou plus, comme chaîne oxyalkylène dans l'unité constitutive (II).

**3.** Polymère poly(acide carboxylique) à ajouter au ciment selon la revendication 2, où des chaînes oxyalkylène contenant chacune une unité constitutive d'un radical oxyalkylène ayant 2 atomes de carbone sont liées aux extrémités de la chaîne oxyalkylène contenant une unité constitutive d'un radical oxyalkylène ayant 3 atomes de carbone ou plus.

**4.** Mélange de ciment comprenant un polymère poly(acide carboxylique), **caractérisé en ce que**

(1) la distribution de poids moléculaire du polymère poly(acide carboxylique) est déterminée par chromatographie de perméation sur gel pour donner une courbe de distribution du poids moléculaire, ayant le temps d'élution sur l'axe horizontal,
(2) une ligne de base est dessinée sur la courbe de distribution du poids moléculaire,
(3) le temps au départ de l'élution, le temps à la fin d'élution et le moment de maximum d'un pic correspondant au composant polymère sont déterminés respectivement comme Lh, Ln et Mp,
(4) Lm est calculé selon la formule (1) suivante :

$$Lm = (Ln + Mp)/2 \qquad (1),$$

et
(5) $P_0$ et $Q_0$ satisfont la formule (2) suivante :

$$15 \leq (P_0 \times 100)/(P_0 + Q_0) \leq 45 \qquad (2)$$

où $P_0$ est défini comme la surface du pic entre les temps d'élution Lm et Ln et $Q_0$ est défini comme la zone du pic entre les temps d'élution Lh et Mp,
le polymère contient une unité constitutive (I) en une quantité allant de 2 % en poids à 90 % en poids, représentée par la formule chimique (3) suivante :

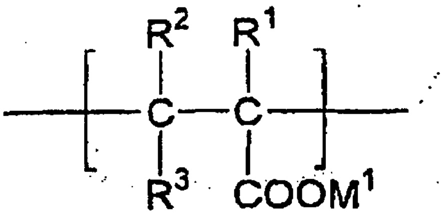

(3)

[où $R^1$, $R^2$ et $R^3$ représentent chacun indépendamment, un atome d'hydrogène, un radical méthyle ou $-(CH_2)_ZCOOM^2$ [$-(CH_2)_ZCOOM^2$ pouvant former un anhydride avec $-COOM^1$ ou un autre $-(CH_2)_ZCOOM^2$] ; Z représente un entier allant de 0 à 2 ; et $M^1$ et $M^2$ représentent chacun indépendamment, un atome d'hydrogène, un atome de métal alcalin, un atome de métal alcalino-terreux, un radical ammonium ou un radical amine organique], et

le polymère contient une unité constitutive (II) en une quantité allant de 2 % en poids à 98 % en poids, représentée par la formule chimique (4) suivante :

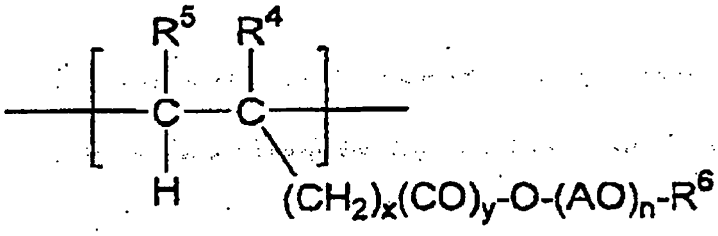

(4)

[où $R^4$ et $R^5$ représentent chacun indépendamment, un atome d'hydrogène ou un radical méthyle ; chaque AO représente indépendamment, un radical oxyalkylène ayant 2 atomes de carbone ou plus ou un mélange de deux ou plusieurs de ceux-ci ; x représente un entier allant de 0 à 2 ; y est 0 ou 1 ; n représente le nombre moyen de mole de radical oxyalkylène additionné, allant de 1 à 300 ; et $R^6$ représente un atome d'hydrogène ou un radical hydrocarboné ayant 1 à 20 atomes de carbone].

**5.** Mélange de ciment selon la revendication 4, comprenant en outre un deuxième polymère poly(acide carboxylique), qui est différent du polymère poly(acide carboxylique).

**6.** Mélange de ciment selon la revendication 4, comprenant en outre un adduit d'une polyalkylèneimine avec un oxyde d'alkylène.

**7.** Mélange de ciment selon la revendication 4, comprenant en outre un deuxième polymère poly(acide carboxylique), qui est différent du polymère poly(acide carboxylique), et un adduit d'une polyalkylèneimine avec un oxyde d'alkylène, en un rapport du polymère poly(acide carboxylique)/deuxième polymère poly(acide carboxylique)/adduit polyalkylèneimine avec un oxyde d'alkylène de 10 à 80/10 à 89/1 à 80 (en masse).

**8.** Mélange de ciment selon la revendication 4, comprenant en outre un deuxième polymère poly(acide carboxylique), qui est différent du polymère poly(acide carboxylique), et un adduit d'une polyalkylèneimine avec un oxyde d'alkylène, en un rapport du polymère poly(acide carboxylique)/deuxième polymère poly(acide carboxylique)/adduit polyalkylèneimine avec un oxyde d'alkylène de 10 à 80/10 à 89/1 à 80 (en masse).

**9.** Composition de ciment comprenant :

un mélange de ciment contenant un polymère poly(acide carboxylique),
au moins un ciment, et
de l'eau, où
(1) la distribution de poids moléculaire du polymère poly(acide carboxylique) est déterminée par chromatographie de perméation sur gel pour donner une courbe de distribution du poids moléculaire, ayant le temps d'élution sur l'axe horizontal,

(2) une ligne de base est dessinée sur la courbe de distribution du poids moléculaire,
(3) le temps au départ de l'élution, le temps à la fin d'élution et le moment de maximum d'un pic correspondant au composant polymère sont déterminés respectivement comme Lh, Ln et Mp,
(4) Lm est calculé selon la formule (1) suivante :

$$Lm = (Ln + Mp)/2 \quad (1),$$

et
(5) $P_0$ et $Q_0$ satisfont la formule (2) suivante :

$$15 \leq (P_0 \times 100)/(P_0 + Q_0) \leq 45 \quad (2)$$

où $P_0$ est défini comme la surface du pic entre les temps d'élution Lm et Ln et $Q_0$ est défini comme la zone du pic entre les temps d'élution Lh et Mp,
où le polymère contient une unité constitutive (I) en une quantité allant de 2 % en poids à 90 % en poids, représentée par la formule chimique (3) suivante :

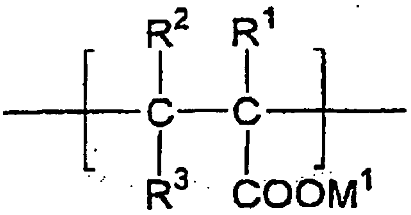
(3)

[où $R^1$, $R^2$ et $R^3$ représentent chacun indépendamment, un atome d'hydrogène, un radical méthyle ou $-(CH_2)_zCOOM^2$ [$-(CH_2)_zCOOM^2$ pouvant former un anhydride avec $-COOM^1$ ou un autre $-(CH_2)_zCOOM^2$] ; Z représente un entier allant de 0 à 2 ; et $M^1$ et $M^2$ représentent chacun indépendamment, un atome d'hydrogène, un atome de métal alcalin, un atome de métal alcalino-terreux, un radical ammonium ou un radical amine organique], et
où le polymère contient une unité constitutive (II) en une quantité allant de 2 % en poids à 98 % en poids, représentée par la formule chimique (4) suivante :

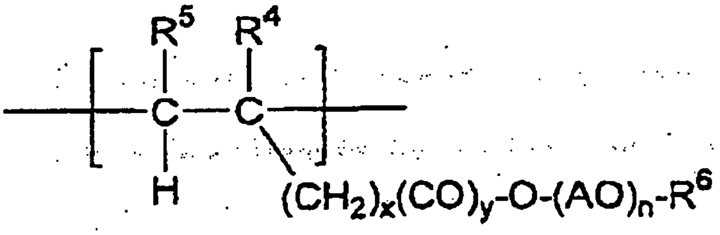
(4)

[où $R^4$ et $R^5$ représentent chacun indépendamment, un atome d'hydrogène ou un radical méthyle ; chaque AO représente indépendamment, un radical oxyalkylène ayant 2 atomes de carbone ou plus ou un mélange de deux ou plusieurs de ceux-ci ; x représente un entier allant de 0 à 2 ; y est 0 ou 1 ; n représente le nombre moyen de mole de radical oxyalkylène additionné, allant de 1 à 300 ; et $R^6$ représente un atome d'hydrogène ou un radical hydrocarboné ayant 1 à 20 atomes de carbone].

**10.** Procédé de production d'un polymère poly(acide carboxylique) à mélanger au ciment, comprenant la polymérisation d'un composant monomère insaturé contenant un monomère représenté par la formule chimique

(5) suivante :

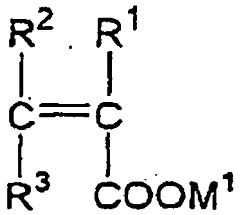

(5)

[où $R^1$, $R^2$ et $R^3$ représentent chacun indépendamment, un atome d'hydrogène, un radical méthyle ou $-(CH_2)_ZCOOM^2$ [$-(CH_2)_ZCOOM^2$ pouvant former un anhydride avec $-COOM^1$ ou un autre $-(CH_2)_ZCOOM^2$] ; Z représente un entier allant de 0 à 2 ; et $M^1$ et $M^2$ représentent chacun indépendamment, un atome d'hydrogène, un atome de métal alcalin, un atome de métal alcalino-terreux, un radical ammonium ou un radical amine organique] en au moins deux étapes, où les quantités d'agent de transfert de chaîne par rapport aux composants monomères insaturés sont différentes dans l'une et dans l'autre,
où les quantités d'agent de transfert de chaîne utilisées par rapport aux composants monomères insaturés sont différentes de 5 fois ou plus entre les étapes de polymérisation composant les deux étapes, et
le composant monomère insaturé contient un monomère représenté par la formule chimique (6) suivante :

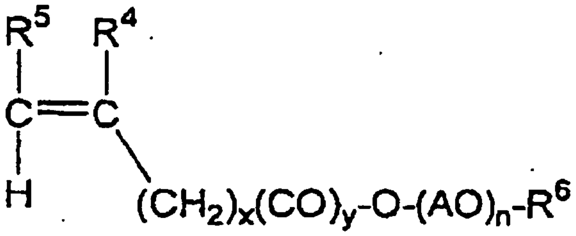

(6)

[où $R^4$ et $R^5$ représentent chacun indépendamment, un atome d'hydrogène ou un radical méthyle ; chaque AO représente indépendamment, un radical oxyalkylène ayant 2 atomes de carbone ou plus ou un mélange de deux ou plusieurs de ceux-ci (lorsque deux radicaux oxyalkylène ou plus sont utilisés, les radicaux oxyalkylène peuvent être additionnés sous forme de séquence ou de manière statistique) ; x représente un entier allant de 0 à 2 ;
y est 0 ou 1 ; n représente le nombre moyen de mole de radical oxyalkylène additionné, allant de 1 à 300 ; et $R^6$ représente un atome d'hydrogène ou un radical hydrocarboné ayant 1 à 20 atomes de carbone].

FIG.1

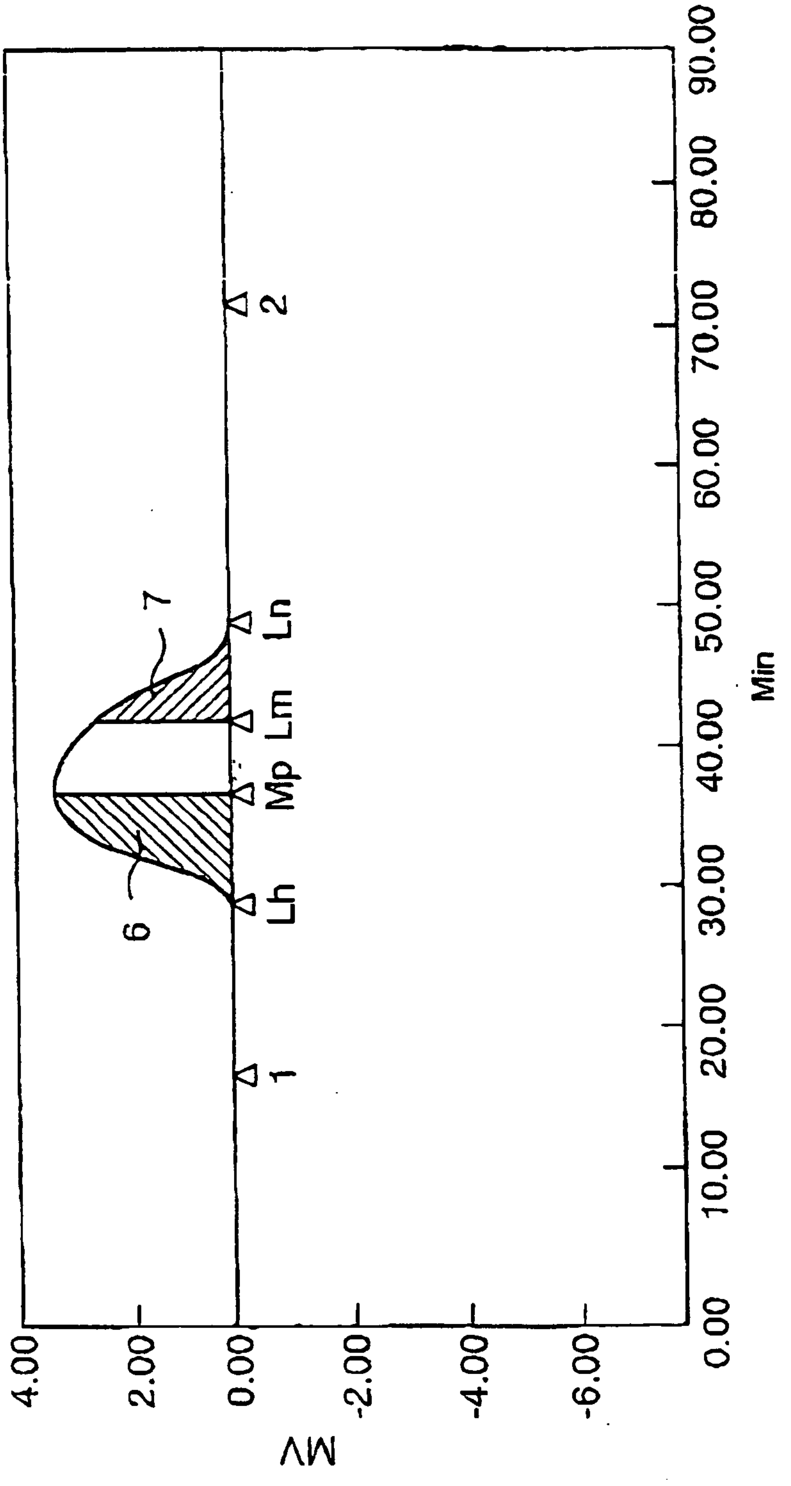
4.00
2.00
0.00
-2.00
-4.00
-6.00
MV
0.00
10.00
20.00
30.00
40.00
50.00
60.00
70.00
80.00
90.00
Min
1
Lh
Mp
Lm
Ln
2
6
7

FIG.2

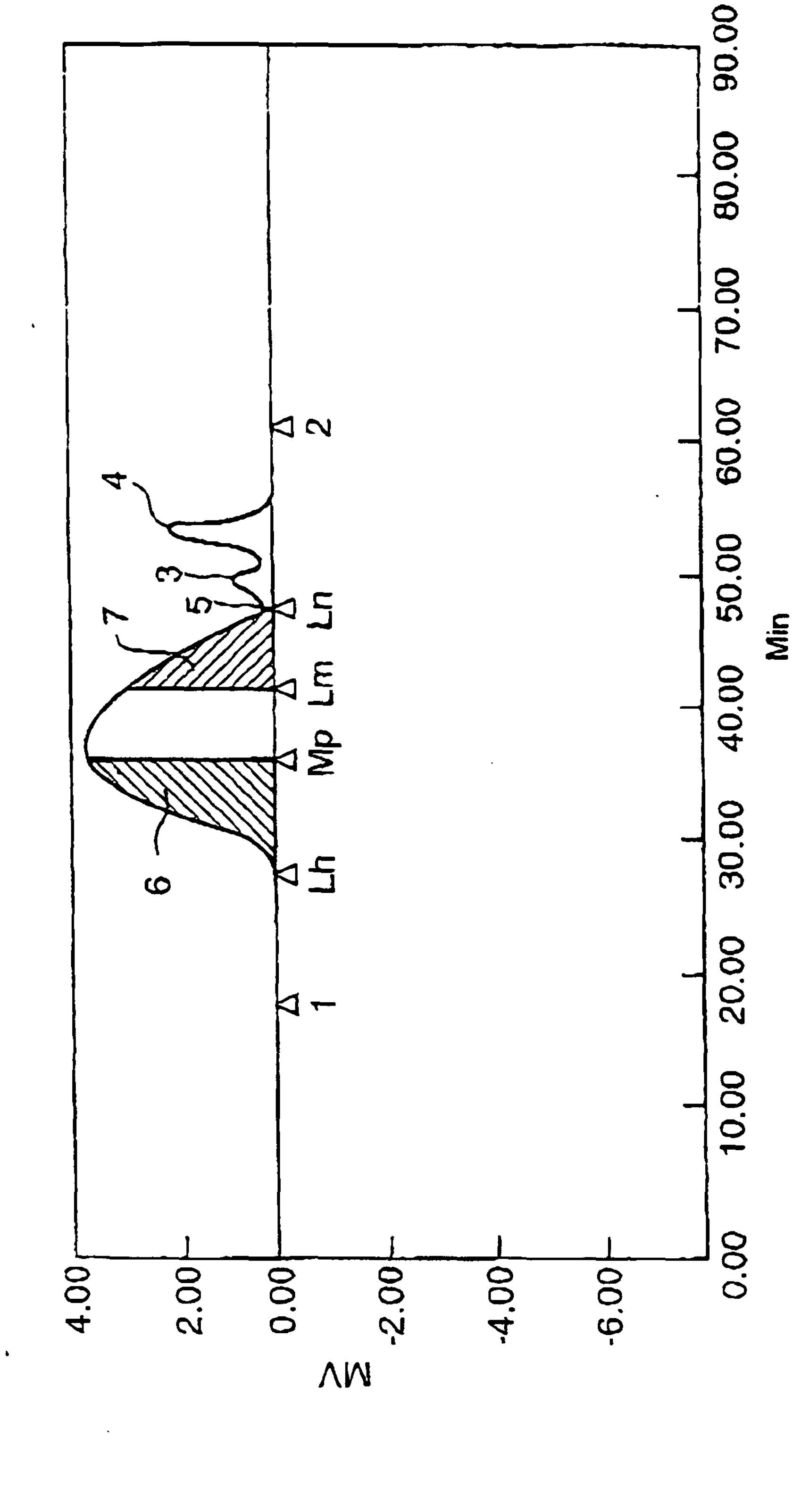
MV
4.00
2.00
0.00
-2.00
-4.00
-6.00
Min
0.00
10.00
20.00
30.00
40.00
50.00
60.00
70.00
80.00
90.00
1
Lh
Mp
Lm
Ln
2
3
4
5
6
7

FIG.3

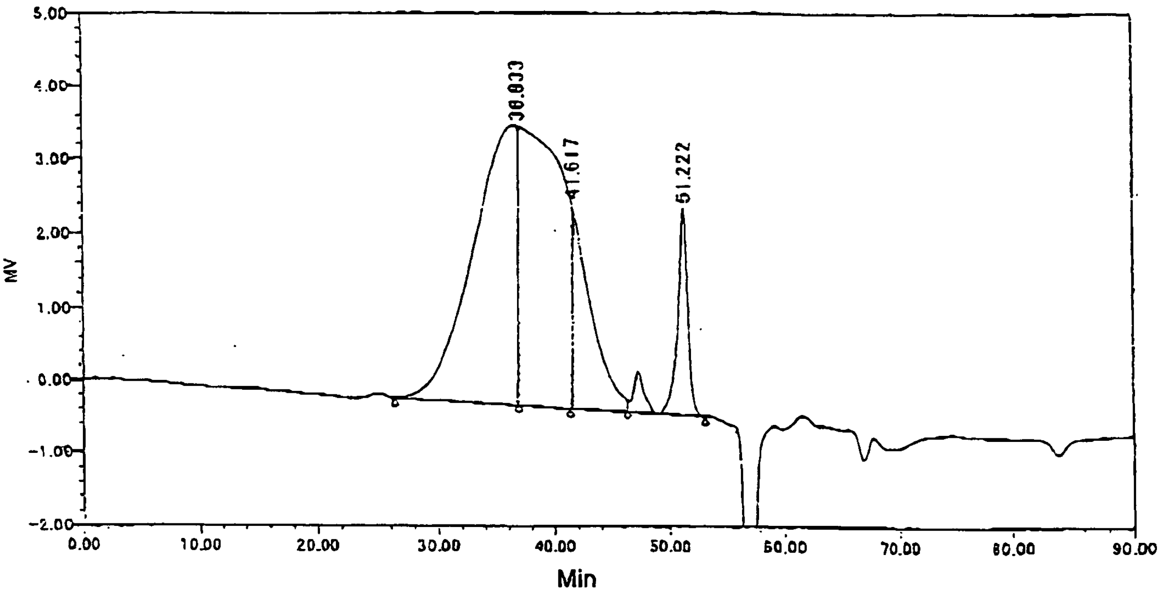
5.00
4.00
3.00
2.00
1.00
0.00
-1.00
-2.00
MV
36.833
41.617
51.222
0.00
10.00
20.00
30.00
40.00
50.00
60.00
70.00
80.00
90.00
Min

FIG.4

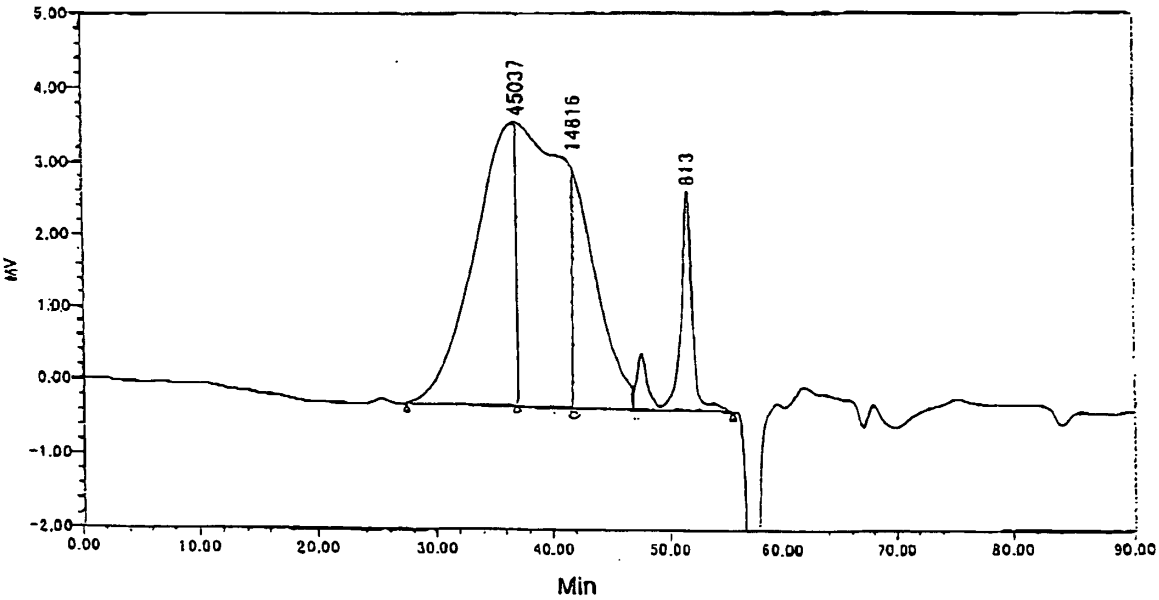
5.00
4.00
3.00
2.00
1.00
0.00
-1.00
-2.00
MV
45037
14816
813
0.00
10.00
20.00
30.00
40.00
50.00
60.00
70.00
80.00
90.00
Min

FIG.5

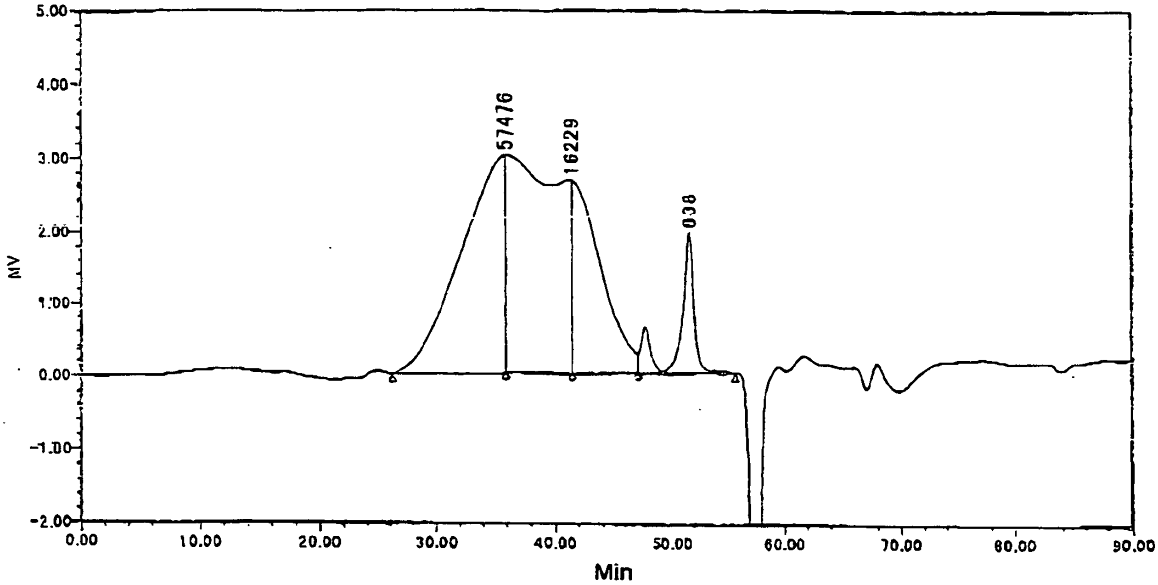
5.00
4.00
3.00
2.00
1.00
0.00
-1.00
-2.00
MV
57476
16229
038
0.00
10.00
20.00
30.00
40.00
50.00
60.00
70.00
80.00
90.00
Min

FIG.6

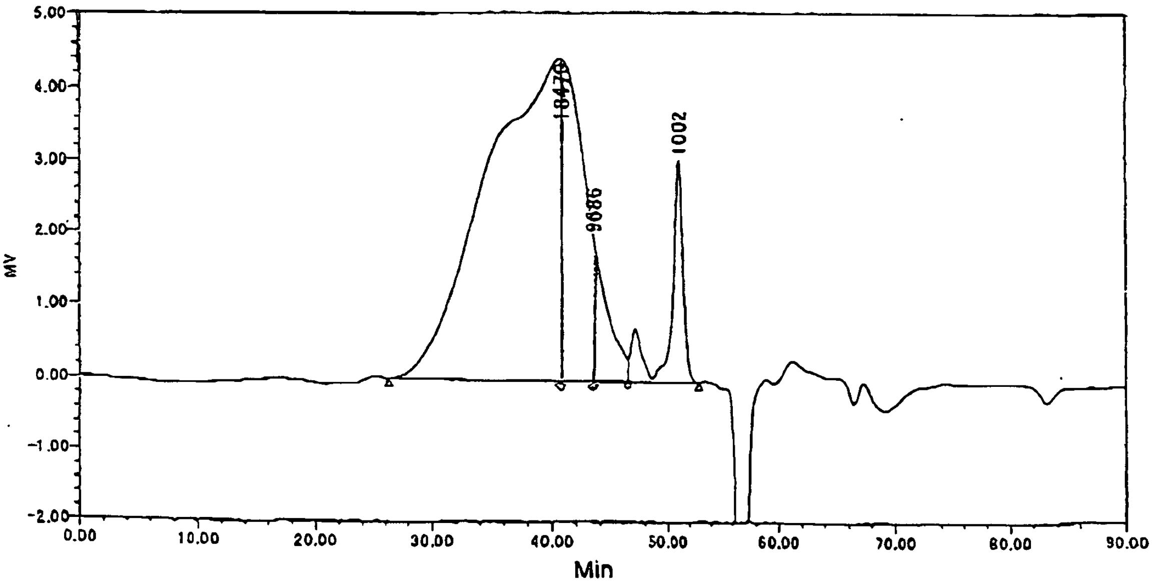
5.00
4.00
3.00
2.00
1.00
0.00
-1.00
-2.00
MV
18470
9686
1002
0.00
10.00
20.00
30.00
40.00
50.00
60.00
70.00
80.00
90.00
Min

FIG.7

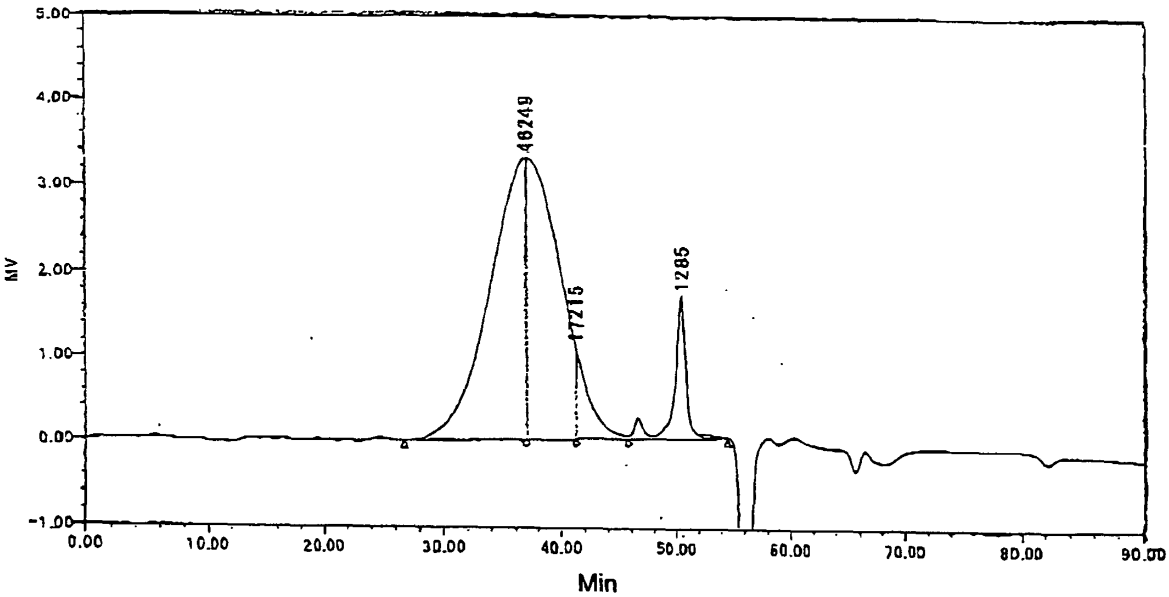
5.00
4.00
3.00
2.00
1.00
0.00
-1.00
MV
46249
17215
1285
0.00
10.00
20.00
30.00
40.00
50.00
60.00
70.00
80.00
90.00
Min

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0986990 A
- JP H09286645 A
- JP 2003206169 A